# EUROPEAN PATENT APPLICATION

(11) **EP 3 297 222 A1**
(43) Date of publication of application: **21.03.2018**
(21) Application number: 16189031.4
(22) Date of filing: 15.09.2016
(51) Int. Cl.: H04L 12/66

(54) **CONFIGURATION GATEWAY**

(71) Applicant: Eco-i Limited, Knutsford, Cheshire WA16 8GS (GB)
(72) Inventor: HODGES, David, Knutsford, Cheshire WA16 8GS (GB)
(74) Representative: McDougall, Robert Campbell

(57) **Abstract**

There is presented a processing apparatus (1, 101, 200, 1023) for interfacing with electronic equipment (109). The processing apparatus (1, 101, 200, 1023) comprising a memory (106) with a first set of instructions and first communications apparatus (102a) that is configured to: operate in accordance with a first communications method (107); and, receive data from the communication apparatus (110) of the electronic equipment (109). The received data associated with the operation of the electronic equipment (109). A processor (103) is configured to: process the received data from the electronic equipment (109); and, determine output data from the processed data. One or more second communication apparatus (102b) is used wherein at least one of the said second communication apparatus (102b) is configured to at least transmit the determined output data to a remote device (105) different to the electronic equipment (109). The processing apparatus (1, 101, 200, 1023) may be configured to process data based at least upon the said first set of instructions and configuration data (4), the configuration data (4) associated with the electronic equipment (109).

## Description

### Field of the invention

The present invention is in the field of apparatus for interfacing between end devices and control hardware, in particular, but not limited to apparatus for controlling a building environment.

### Background

Existing Heating, Ventilations and Air Conditioning (HVAC) systems, or other types of systems that control building or vehicle environmental conditions, are commonly controlled by a building management system (BMS). Some existing BMS's typically use local devices (also referred to herein as local control units) to gather and send data from/to different HVAC utility devices (also referred to herein as 'appliances') such as boilers and air conditioners and further send/receive data in a different format to/from another control device such as a building management hub which may have a computer terminal that a buildings supervisor uses to control the building environment day to day. The local devices used to gather the data from the HVAC utility devices are typically relatively large devices that are located remotely from the HVAC utility devices. Each local device is typically connected to multiple HVAC utility devices by interfacing with each of the utility device's built-in external communication port such an RS232 connection.

When a HVAC system is installed into a building and a BMS is used to control it, the utility devices need to be connected to the local device and the local device needs to be configured according to the utility devices it is wired to. This process involved an installation engineer or other professional manually connecting up all of the local utility devices to the local device. The local devices, such as a Tridium Jace ^{®}often have computer apparatus inside them including memory and a processor, however the installation engineer has to write a bespoke program for the local device that allows it to correctly process and convert data from all the different connected utility devices into a data that is output to the BMS magament system, such as a central computer. Manually programming the local device can be complicated as the number of connected utility devices increases, particularly when different utility devices have different types of output data ports using different communication protocols. Such complications may increase the likelihood of programming faults, increase the time to create the program and install the local device, hence increasing the expense of overall installation. Furthermore, the onus and risk is put onto the installation engineer to make sure the local device is programmed correctly otherwise the whole HVAC system may not be able to work through the BMS control. The installation engineer is also required to find a location to house the local device, which can sometime be a problem in a cluttered building environment, particularly when the local devices are required to be wired to multiple different utility devices with different cables (for example by RS232 or RS45 cables).

In existing installations, because a dedicated program has to be written to make the local device operate, the program may only be configured to handle the minimum number of data variables from a particular utility device. For example, a boiler can actually function using 50 variables but the programmer only writes the program using the key 20 variables that make the basic functions work, but do not include other useful functions. This may occur due to time pressure in writing the program, the costs of writing the program and programming capabilities of the programmer. The number and type of signals output from the utility device that are process-able by the local device, hence usable by the BMS can therefore be limited. In turn, this may entail that the local device is only able to utilise a subset of the possible range of available functions on the existing utility device, causing under-utilisation of the complex capabilities pre-installed into the utility device.

Existing local control units are only typically used to send control data and gather feedback data from the connected utility devices. External control systems therefore have limited usefulness in the requirement of an overall HVAC system operating in a building. Some HVAC systems and devices may require, for example, software to be updated or the devices to be registered with a supplier. Traditional HVAC devices and systems installed in more traditional ways, require a user to manually initiate or implement these functions, for example: by sending the HVAC utility device or appliance back to the manufacturer or by having an authorised user manually interrogate the system and provide the update. An installation engineer may also have to manually scan in or type in a code or other data and transmit this data to the manufacturer. This could be, for example to start a warranty or otherwise log the device onto their central database system for other reasons.

Appliances may be preconfigured to operate in a particular manner or have a predefined set of allowed operations. These, for example, may be set by the manufacturer due to the most popular demands or for safety reasons for the average user, but actually have a capability of operating in more ways than initially programmed. This can cause an issue where an HVAC system may want to operate beyond a certain pre-programmed threshold (based on normal safety requirements for a domestic building) in an environment where such safety considerations are not necessary. It may also be that an HVAC device may be required to initially operate in a 'safe mode', for example during installation and initial testing, where only one basic set of parameters are used, but once installation and test is over, may be required to be used with more parameters. A programmer writing the program for the local device may not have the time to write two sets of programs.

General BMS control systems used to drive certain appliances are often limited to using certain communication methods and standards and hence certain communication means and apparatus. Some of these are driven by industry standard. In an HVAC system where multiple environmental factors are controlled/monitored, there may be issues in sharing data between the different component parts of the HVAC system. These issues may include, for example,: feeding back lighting parameters to affect heating parameters wherein each system uses a different industry standard. In this example, an installation engineer may have to implement an additional separate system for converting the data so that one system can use the data from the other system. The conversion process may be prone to errors and the system to implement it may be expensive.

GB2526511 (A) describes_a remote device for controlling an appliance. A mobile communication device is configured to communicate wirelessly with a processor to control a thermal appliance such as a boiler. Additionally, a process for controlling a thermal appliance using a plurality of mobile devices is also defined.

GB2526523 (A) describes a controller for a thermal appliance, where the controller is configured to communicate over a network with a wireless mobile device. The controller comprises a processor and data store and the mobile device is located in a transport infrastructure such that the time at which a user returns to a building can be calculated and the operation of the thermal appliance can be altered accordingly. Figure 1 of GB2526523 shows the controller in the premises and the mobile device 9 in the transport infrastructure. The example depicted is one in which the transport infrastructure is a rail network, in which a user leaves an office and passes through a station en-route to the residential premises.

Although the above discussion relates to HVAC equipment, the same issues may arise in other systems, such as but not limited to laboratories with lab equipment that are controlled centrally.

### Summary

According to a first aspect of the present invention there is provided a processing apparatus for interfacing with electronic equipment; the electronic equipment: comprising communications apparatus configured to operate in accordance with a first communication method; and, being configured to: receive, via the said communications apparatus, an input control signal for controlling the operation of the electronic equipment; and, operate at least partially based on the said input control signal; and/or, monitor an external physical stimulus and output a signal via the communications apparatus based upon the said monitored stimulus; the processing apparatus comprising: a memory containing at least a first set of instructions; a first communications apparatus configured to: operate in accordance with the first communications method; and, receive data from the communication apparatus of the electronic equipment; the received data associated with the operation of the electronic equipment; a processor configured to at least: i) process the received data from the electronic equipment; and, ii) determine output data from the processed data; one or more second communication apparatus wherein at least one of the said second communication apparatus is configured to at least: iii) transmit the determined output data, according to one or more second communication methods that are different to the first communication method, to a remote device different to the electronic equipment; wherein the processing apparatus is configured to perform at least one of said features: i), ii) or iii), based at least upon the said first set of instructions and configuration data, the configuration data associated with the electronic equipment.

The first aspect may be adapted or modified according to any example or with any suitable feature or configuration described herein, including but not limited to any one or more of the following.

The processing apparatus may be configured such that the memory comprises the configuration data.

The processing apparatus may be configured to receive the configuration data via one or more of the said second communication apparatus.

The processing apparatus may be configured to output a request for the configuration data upon a communication sent between the first communications apparatus of the processing apparatus and the communications apparatus of the electronic equipment.

The processing apparatus may be configured such that the said data received via the first communication apparatus comprises any of: operating parameters of the electronic equipment; and/or, operating parameter values of the electronic equipment; and/or, identity data associated with the electronic equipment.

The processing apparatus may be configured such that the second communication apparatus used to transmit the determined output data comprises a wireless communications apparatus.

The processing apparatus may be configured such that the step of processing the received data comprises any one or more of: converting the input data from a first format to a second format; filtering the input data.

The processing apparatus may be configured such that the step of determining the output data comprises any one or more of:
A) selecting, based on the configuration data, at least a portion of the processed data for transmitting to the said remote device;
B) selecting, based on the configuration data, at least a portion of the processed data for transmitting to a further remote device that is different to the said remote device and the electronic equipment;
C) selecting, based on the configuration data, at least a portion of the processed data for storing in the memory.

The processing apparatus may be configured such that any of the selecting steps A) and B) comprise: determining a data type for each of the processed data; comparing the said data types to a list of data types in the configuration data; selecting the said portion of the processed data based on the comparison.

The processing apparatus may be configured to transmit the selected portion periodically to a remote data storage.

The processing apparatus may be configured to:
A) output a request for first identity data to the electronic equipment upon the first communication apparatus being connected to the communications apparatus of the electronic equipment; and/or,
B) receive first identity data from electronic equipment the upon the first communication apparatus being connected to the communications apparatus of the electronic equipment.

The processing apparatus may be configured to perform any one or more of:
A) send a request for a further configuration data via one of the second communication apparatus;
B) send a request for a further set instructions of via one of the second communication apparatus;
C) receive further configuration data via one of the second communication apparatus;
   wherein at least one or more of the said steps i)- iii) is based at least upon the further configuration data;
D) receive a further set of instructions via one of the second communication apparatus;
   wherein at least one or more of the said steps i)- iii) is based at least upon the further set of instructions.

According to a second aspect of the present invention there is provided an electronic apparatus comprising the electronic equipment as described in the first aspect and a processing apparatus, as described in the first aspect, located within or upon the said electronic equipment.

The second aspect may be adapted or modified according to any example or with any suitable feature or configuration described herein.

According to a third aspect of the present invention there is provided a system comprising: a plurality of the electronic apparatus as described in the second aspect; and, the remote device as described in the first aspect; wherein the said remote device comprises a management apparatus, the management apparatus: being remote from each of the said plurality of electronic apparatus; and, configured to wirelessly communicate with each of the said plurality of electronic apparatus via the said one or more second communication apparatus; comprising a processor configured to: process data wirelessly received from at least one of the said plurality of electronic apparatus; and/or, generate control signals for wirelessly transmitting to at least one of the said plurality of electronic apparatus.

The third aspect may be adapted or modified according to any example or with any suitable feature or configuration described herein.

According to a fourth aspect of the present invention there is provided a method for making an electronic apparatus as described in the second aspect; the method comprising the step of: installing a processing apparatus as described in the first aspect within or upon the said electronic equipment as described in the first aspect.

The fourth aspect may be adapted or modified according to any example or with any suitable feature or configuration described herein.

According to a fifth aspect of the present invention there is provided a method for installing an electronic apparatus as described in the second aspect; the method comprising the step of: transmitting, from a remote device, configuration data to the processing apparatus.

The fifth aspect may be adapted or modified according to any example or with any suitable feature or configuration described herein.

According to a sixth aspect of the present invention there is provided a method for transmitting data from an electronic apparatus as described in the second aspect to a remote device as described in the first aspect; the method comprising the steps of: receiving data from the communication apparatus of the electronic equipment; processing the received data from the electronic equipment; and, determining output data from the processed data; transmitting the determined output data, according to one or more second communication methods that are different to the first communication method, to the remote device.

The sixth aspect may be adapted or modified according to any example or with any suitable feature or configuration described herein.

According to a seventh aspect of the present invention there is provided a processing apparatus for installing into a building management system appliance, the apparatus comprises: one or more communication apparatus for: receiving first data from the said appliance according to a first communication method; outputting second data according to a second communication method that is different to the first communication method; a processor configured to generate the second data from the first data.

The seventh aspect may be adapted or modified according to any example or with any suitable feature or configuration described herein, including but not limited to any one or more of the first aspect and/or the following.

The processing apparatus may comprise: a memory containing at least a first set of instructions; a first communications apparatus configured to: operate in accordance with the first communications method; and, receive data from the communication apparatus of the building management system appliance; the received data associated with the operation of the building management system appliance; a processor configured to at least: i) process the received data from the building management system appliance; and, ii) determine the second data from the processed data; the second data for being output be the processing apparatus; one or more second communication apparatus wherein at least one of the said second communication apparatus is configured to at least: iii) transmit the determined output data, according to at least the second communication method, to a remote device different to the electronic equipment.

According to an eighth aspect of the present invention there is provided a system comprising: a first building management system, BMS, appliance and, a second BMS appliance, a remote device being remote from both the first and second BMS appliances; the first and second said BMS appliances each wirelessly connectable to the remote device and configured to wirelessly send and/or receive data to/from the remote device; wherein the first BMS appliance is configured to: wirelessly receive first data from the second BMS appliance; and, transmit second data to the remote device, the second data associated with the first data.

The eighth aspect may be adapted or modified according to any example or with any suitable feature or configuration described herein.

The processing apparatus may be configured such that the data received by the first communication apparatus is associated according to a first communication protocol associated with the first communication apparatus.

The processing apparatus may be configured such that the data output by the second communication apparatus is associated according to a second communication protocol associated with the second communication apparatus.

The processing apparatus may be configured to transmit the output data to the remote device upon receiving a communication from the remote device.

The processing apparatus may be configured to transmit output data to one or more of a plurality of remote devices.

The processing apparatus may comprise a board computer.

The processing apparatus may comprise an outer case.

The processing apparatus may comprise attachment means allowing the apparatus to be attached to electronic equipment.

The system may further comprise a central communications hub for wirelessly communicating with the said electronic apparatus via the second communication apparatus of the respective processing apparatus.

The system may be configured such that the one or more processing apparatuses are capable of receiving a communication indicating the purpose of a remote device.

According to a ninth aspect of the present invention there is provided a method of installing a processing apparatus to the electronic equipment, wherein the processing apparatus according to the first aspect performs the step of: receiving configuration data.

The ninth aspect may be adapted or modified according to any example or with any suitable feature or configuration described herein, including but not limited to any one or more of the first aspect and/or the following.

The method may further comprise the step of the apparatus sending a communication to a remote device prior to the receipt of configuration data.

The method may be configured such that prior to the apparatus sending a communication to a remote device, the apparatus receives an indication of the electronic equipment to which it is installed or being installed.

The method may be configured such that:
a) the electronic equipment communicates the indication of the electronic equipment to which the apparatus is installed or being installed to the apparatus; and/or
b) the communication sent by the apparatus to the remote device comprises information in relation to the electronic equipment; and/or
c) the configuration data received by the apparatus is received from a remote device or removable data storage.

According to a tenth aspect of the present invention there is provided a method of processing data received from electronic equipment for output to a remote device, comprising the steps of:
1) a processing apparatus according to the first aspect, receives information from the electronic equipment in a 1^{st} communication protocol inherent to said electronic equipment;
2) the processing apparatus processes said data according to configuration data associated with the electronic equipment;
3) the processing apparatus then transmits the organised data, using a 2^{nd} communication protocol to the remote device.

The tenth aspect may be adapted or modified according to any example or with any suitable feature or configuration described herein.

According to an eleventh aspect of the present invention there is provided a method of processing data received from electronic equipment for output to a remote device, comprising the steps of:
a) the processing apparatus transmits/receives information to/from the electronic equipment in a 1^{st} communication protocol inherent to said electronic equipment;
b) the processing apparatus processes received data according to configuration data associated with the electronic equipment;
c) the processing apparatus transmits/receives data to/from the remote device, using a 2^{nd} communication protocol.

The eleventh aspect may be adapted or modified according to any example or with any suitable feature or configuration described herein.

According to a twelfth aspect of the present invention there is provided a processing apparatus for installing into a building management system appliance, the apparatus comprises: one or more communication apparatus for: receiving first data from the said appliance; outputting one or more second data, associated with the first data, to a plurality of remote devices or services; and, a processor configured to generate the second data from the first data.

The twelfth aspect may be adapted or modified according to any example or with any suitable feature or configuration described herein.

Embodiments of the present invention will now be described in detail with reference to the accompanying drawings, in which:
Figure 1a shows a block diagram example of a processing apparatus;
Figure 1b shows a block diagram example of a processing apparatus similar to figure 1a but where the apparatus is configured to receive configuration data;
Figure 1c shows a block diagram example of a processing apparatus similar to figure 1b but where the apparatus is configured to receive configuration data from a remote device;
Figure 1d shows a block diagram example of a processing apparatus similar to figure 1a but where the apparatus comprises memory;
Figure 2a shows a block diagram example of a processing apparatus which comprises a 1^{st} and a 2^{nd} communication apparatus, the 1^{st} communication apparatus configured to receive a communication from hardware, the 2^{nd} communication apparatus configured to output data to a remote device;
Figure 2b shows a block diagram example of a processing apparatus similar to figure 2a but where the apparatus is in two-way communication with the hardware, and is in two-way communication with the remote device;
Figure 2c shows a block diagram example of a processing apparatus similar to figure 2b but where the apparatus is in communication with a plurality of remote devices;
Figure 3a shows a block diagram example of a board computer;
Figure 3b shows a block diagram example of a board computer similar to figure 3a, comprised within an outer case that includes attachment means;
Figure 4 shows a block diagram example of a processing apparatus in communication with a plurality of devices and services;
Figure 5a shows a block diagram example of a system comprising a management system, an electronic appliance, and an apparatus installed to the appliance;
Figure 5b shows a block diagram example of a system similar to figure 5a but where the apparatus and the management system communicate via a communications hub;
Figure 5c shows a block diagram example of a system similar to figure 5b but where a device or apparatus is in communication with the communications hub via an apparatus installed to an appliance;
Figure 5d shows a block diagram example of a system similar to figure 5c but where an apparatus installed to an appliance is in communication with the communications hub via another apparatus installed to an appliance;
Figure 5e shows a diagram example of a system including HVAC appliances, each with an installed apparatus, in communication with a mobile device and a communications hub, where the communications hub is in communication with a network and cloud services;
Figure 6a shows a flow chart example of a method of configuring an apparatus;
Figure 6b shows a flow chart example of a method similar to figure 6a, but where the apparatus sends a communication to a remote device;
Figure 6c shows a flow chart example of a method similar to figure 6b, but where the apparatus receives an indication of the hardware to which it is installed/being installed, and the communication from the apparatus comprises information in relation to the hardware;
Figure 6d shows a flow chart example of a method similar to figure 6c, but where the communication received by the apparatus from the hardware indicates the hardware to which it is installed/being installed, and where the configuration data is received by the apparatus from a remote device or from removable data storage;

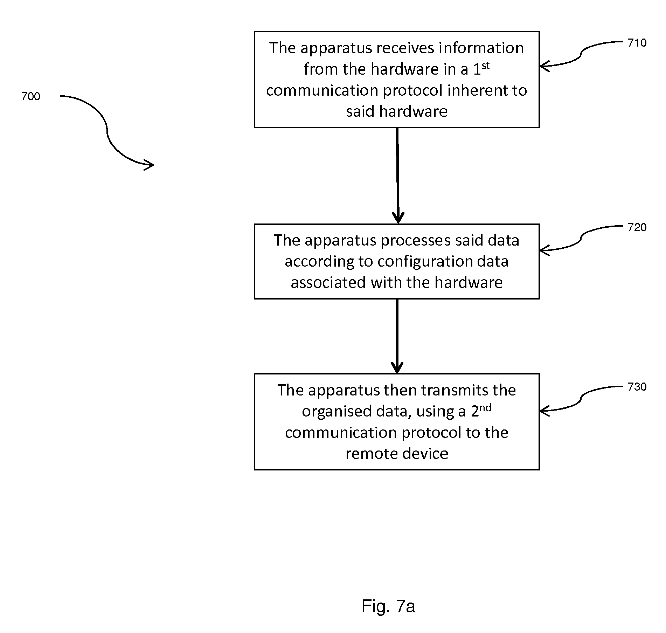

Figure 7a shows a flow chart example of a method of processing data received from hardware for output to a remote device;

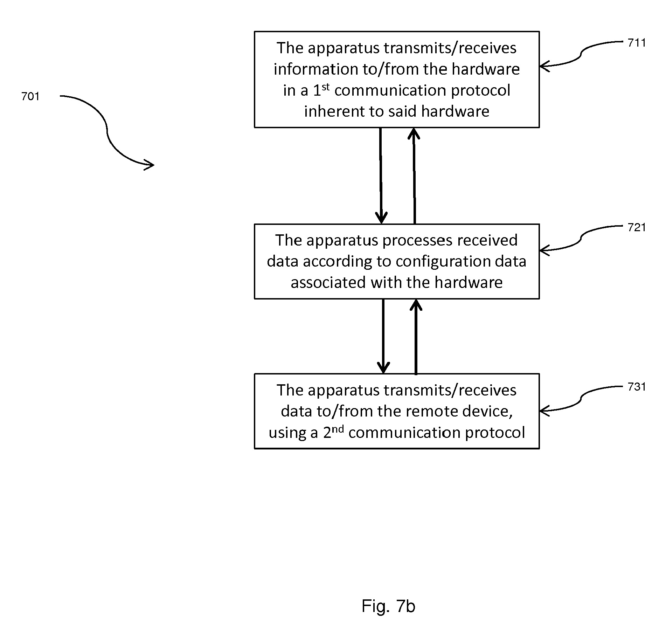

Figure 7b shows a flow chart example of a method similar to figure 7a, but where the method allows the processing of data received from either the hardware or the remote device, and where the method allows the output of data to either the hardware or the remote device.

### Description

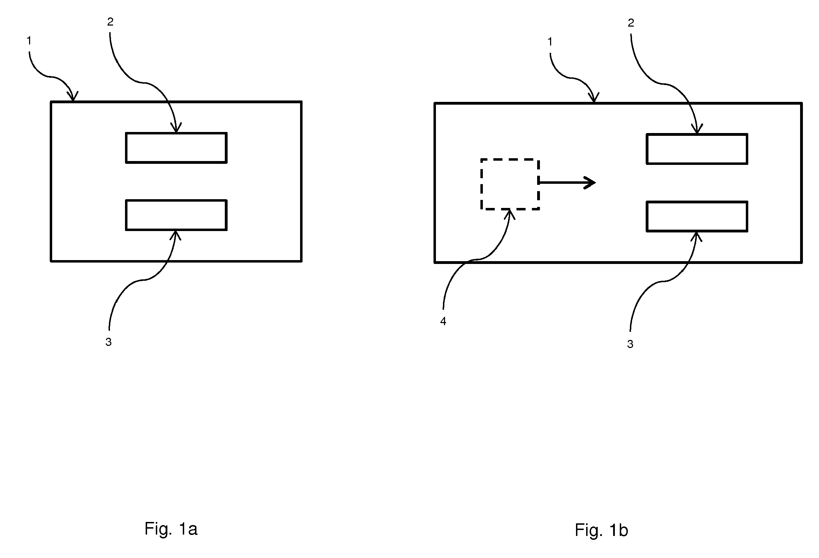

There is presented a processing apparatus for installing into a building management system appliance. An example of the apparatus 1 is shown schematically in figure 1a. The apparatus 1 may comprise one or more communication apparatus 2. The apparatus 1 is for receiving first data from the said appliance according to a first communication protocol; and for outputting second data according to a second communication protocol that is different to the first communication protocol. The apparatus 1 also comprises a processor 3 configured to generate the second data from the first data.

There is also presented a processing apparatus 101 for interfacing with electronic equipment 109. The electronic equipment 109 comprises communications apparatus 110 configured to operate in accordance with a first communication method 107. The electronic equipment 109 may be configured to receive, via the said communications apparatus 110, an input control signal for controlling the operation of the electronic equipment; and operate at least partially based on the said input control signal. Additionally or alternatively the electronic equipment may be further configured to monitor an external physical stimulus and output a signal via the communications apparatus 110 based upon the said monitored stimulus.

The processing apparatus 101, in this example, comprises a memory 106 containing at least a first set of instructions. The processing apparatus 101 also comprises a first communications apparatus 102a configured to operate in accordance with the first communications method 107; and, receive data from the communication apparatus 110 of the electronic equipment 109. The received data is associated with the operation of the electronic equipment 109. The processing apparatus 101 comprises a processor 103 configured to at least: process the received data from the electronic equipment 109; and, determine output data from the processed data.

The processing apparatus 101 also comprises one or more second communication apparatus 102b wherein at least one of the said second communication apparatus 102b is configured to at least transmit the determined output data, according to one or more second communication methods 108 that are different to the first communication method 107, to a remote device 105 different to the electronic equipment 109. The processing apparatus 101 is configured to perform at least one of said steps i) to iii) based at least upon the said first set of instructions and configuration data 4, the configuration data 4 associated with the electronic equipment.

The processing apparatus 1, 101, 200, 1023 may be a device, such as a computer board device, that has the ability to convert data from one or more first communication standards (such as but not limited to: RS232, RS422 and RS485 or other industry standards for communicating between different pieces of equipment) into a common IP protocol such as, but not limited to BACnet.

The term 'HVAC utility devices' is used within this application and is intended to mean the devices used to physically provide the environmental changes to a building or environment where the HVAC system is emplaced. They may also be termed 'appliances'.

Some existing building management systems have the data output from different appliances in different proprietary protocols/communication formats that are associated with the particular appliance. All this varied data, for the existing systems, in turn is then collated by an external device and transformed into data that is process-able by management software. The need for the external device that can operate and deal with all of the different protocols introduces costs onto the BMS and requires the physical installation and hence space for the device. The present apparatus 1, 101, 200, 1023 provides a BMS with appliances that can, each themselves, output data in a protocol that is more suitable for processing by a user and/or management software. This in turn means that a BMS installation using the processing apparatus 1, 101, 200, 1023 does not require a complex and expensive device that is configured to deal with multiple proprietary data formats. For example, in systems where multiple appliances are used, a processing apparatus 1, 101, 200, 1023 as presented may be installed in each of the appliances. Each apparatus 1, 101, 200, 1023 converting the proprietary format into a single common protocol so that all of the information output from the appliances may be directly uploaded and managed by external management systems. In some examples each of the said apparatus 1, 101, 200, 1023 may be configured to receive data that configures the apparatus 1, 101, 200, 1023 to work with the appliance it is installed into/upon. This could be, for example a licence file 4. Because the appliances themselves have their own dedicated apparatus for communicating to, for example, a common central communications hub, the total installation therefore becomes simpler as there is no requirement for a separate local device needing to be programmed, nor long lengths of communication cables running from all the appliances to a local device.

By using the first set of instructions and configuration data 4 to process the data from the electronic equipment 109, 1021, 309 the processing apparatus 1, 101, 200, 1023 can be pre-programmed with the core coding requirements to make a number of functions happen, but still be flexible in its implementation to allow for a flexible and adaptable BMS. For example, the first set of instructions could have any one or more of, but not limited to: code to enable the processing device to organise (for example sort and/or filter) the received data from the electronic equipment; code to enable the processing device to transmit and/or receive data from a remote device (for example code to allow data to be processed, formatted and sent according to a particular communication standard such as BACnet; a list of different code for a number of communication protocols that electronic equipment may use to output data; other code that when run my a processor gives effect to any of the ways in which the processing apparatus is described, herein, to function.

Having the processing apparatus 1, 101, 200, 1023 installed into an electronic equipment 109, 1021, 309 pre-programmed with at least the first set of instructions that can connect it to a remote device, means that the installing engineer does not have to manually program, from scratch, a local device to do the same job.

Furthermore, the configuration data 4 allows for the processing apparatus 1, 101, 200, 1023 to be configured in a particular way suitable for the tasks required of it. For example, the configuration data 4 may provide instructions for any one or more of, but not limited to the following; to configure the processing apparatus 1, 101, 200, 1023 to utilise one or more of its physical communications port 2, 102b that are intended for communicating with electronic equipment 109, 021, 309; to provide a list of data parameters and/or values to extract from the electronic equipment 109, 1021, 309; to provide a list of data parameters and/or values from the electronic equipment 109, 1021, 309 to store in a memory 6, 106; to provide a list of data parameters and/or values from the electronic equipment to transmit to the remote device 105 (such as a building management control hub); to provide a list of data parameters and/or values from the electronic equipment 109 to transmit to remote storage, such as cloud storage; to provide further instructions to download a second set of instructions (for example an updated set of first instructions and/or a further set of instructions required to operate the equipment).

The configuration data 4 may be pre-loaded onto the memory 6, 106, for example a boiler manufacturer pre loading a license file onto the processing device so that when the boiler is installed it is ready to connect directly to the BMS. An advantage of having the first set of instructions pre-loaded onto the memory 6, 106 is that the processing device can be provided to the equipment manufacturer such that the manufacturer only needs to upload a license file for it to be BMS ready. This may be of considerable value to the manufacturer as it ensures that their device is going to be used in the correct manner when installed into a BMS rather than have an unknown programmer determine how it is going to be controlled.

The configuration data 4 may not be pre-loaded onto the memory 6, 106. Instead, the equipment may be installed with (and connected to) the processing apparatus 1, 101, 200, 1023 and shipped to the premises ready for setting up. The installation engineer, when the device is in position and suitably installed with the building to do its primary function, may take steps to upload the configuration data 4 to the memory 6, 106. This may be done in any number of ways including, but not limited to: manually typing in a code associated with the equipment into a program running on wireless communication-enabled portable device 1051, 2008 (for example a tablet or a phone). In turn, the program on the portable device 1051, 2008 communicates with a remote storage means 1020, 2012, (for example the manufacturer's database) to download the correct configuration data 4. This configuration data 4 could be, for example a license file. The manual input of the code may also be done by other means for example scanning a bar code or a QR code on the equipment. Once the license file 4 is downloaded, the program on the portable device 1051, 2008 then transmits the license file 4 to the processing apparatus 1, 101, 200, 1023. This allows the equipment manufacturer and installer to know that the most up to date version of configuration data 4 is being used.

An electronic apparatus 360 is also presented which comprises the electronic equipment 309, 109, 1021 as described above (for example HVAC appliance or any other appliance utilised by a BMS, for example a boiler, inverter, heater etc.) and a processing apparatus 1, 101, 200, 201, 1023 as described above located within or upon the said electronic equipment 109, 309,1021.

A system 350 may be created comprising a plurality of these electronic apparatus 360 and a remote device 305. The said remote device 305 may comprise a management apparatus. The management apparatus: being remote from each of the said plurality of electronic apparatus 360; and, configured to wirelessly communicate with each of the said plurality of electronic apparatus 360 via the said one or more second communication apparatus. The management apparatus comprising a processor configured to: process data wirelessly received from at least one of the said plurality of electronic apparatus 360; and/or, generate control signals for wirelessly transmitting to at least one of the said plurality of electronic apparatus 360.

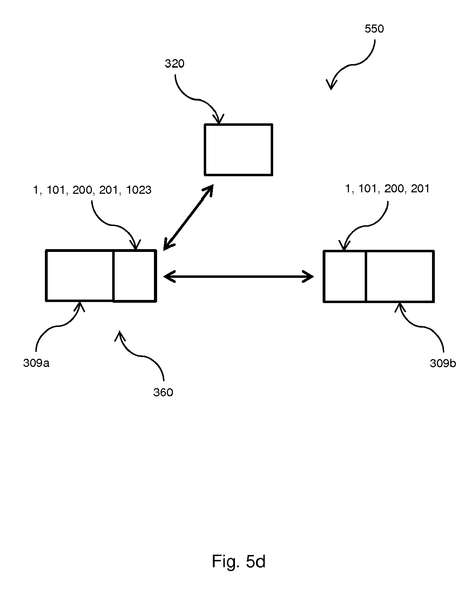

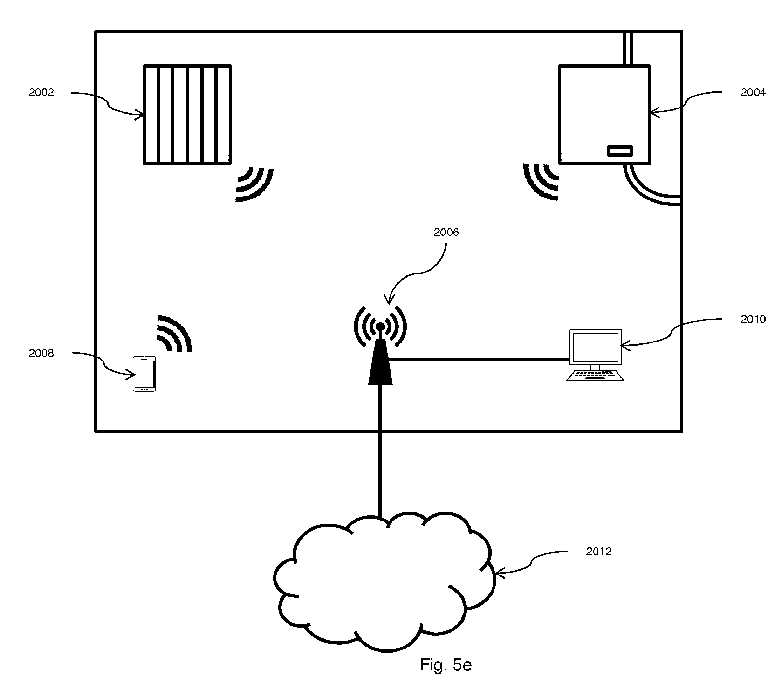

An example of such a system is shown in figure 5e wherein a heater 2002 is installed with a processing apparatus 1, 101, 200, 201, 1023 (not shown) forming one electronic apparatus. Other electronic apparatus include a boiler 2004 installed with a processing apparatus 1, 101, 200, 201, 1023 (not shown). Each of the electronic apparatus 2002, 2004 in this example communicating wirelessly with a communication hub 2006 such as a wireless router. The hub 2006 may wirelessly be connected to a mobile device 2008 that may be used by a user, as described herein, to transfer a license file 4 (not shown), via the hub 2006, to the processing apparatus in each of the electronic apparatus 2002, 2004. The hub 2006 may be in wireless or wired connection to a management computer terminal 2010 used to control the electronic apparatus 2002, 2004 in the local area and/or in other areas. Furthermore, the hub 2006 and/or the terminal 2010 may be able to communicate to a cloud storage 2012, for example to retrieve data or store data.

The electronic apparatus 360 may be made at least by installing a processing apparatus 1, 101, 200, 201, 1023 within or upon the said electronic equipment 309.

Installing an electronic apparatus 360 into a BMS or other system may be done by transmitting, from a remote device, configuration data 4 to the processing apparatus 1, 101, 200, 201, 1023.

A building management system appliance (BMS appliance), as used herein, can be any electronic device for use in controlling, monitoring, or physically altering the environmental conditions of a building. For instance, the environmental conditions controlled, monitored, or altered can be temperature, humidity, ventilation, or lighting. A BMS appliance can also include appliances that are part of the fire, CCTV, or intruder detection systems. The BMS appliance may be an HVAC appliance. Examples of appliances for use with the apparatus 1, 1, 101, 200, 201, 1023 as described herein, include, but are not limited to, heating or cooling devices, ventilation devices, air filtration devices, humidifiers or dehumidifiers, lighting systems, sensors, detectors, alarms, or cameras, inverters. Sensors may be for the detection of any of the environmental conditions to be managed by the building management system. The heating or cooling devices include those for altering the temperature of the ambient air and those for altering the temperature of liquids. Specific examples of building management system appliances include boilers, air conditioning units, heaters, chillers, VRF split units, ventilation appliances, dehumidifiers, fan coil units, VSD drives, pumps, lights, temperature sensors, light sensors, humidity sensors, smoke detectors, smoke alarms, fire detectors, audible alarms, motion detectors, CCTV cameras, door entry sensors, or window entry sensors.

The presently disclosed processing apparatus 1101, 200, 201, 1023 (also referred to herein as the 'apparatus') is not only applicable to BMS appliances, but is suitable for use with any electronic device that would be advantageously controlled by a computerised management system. The presently disclosed apparatus 1, 101, 200, 201, 1023 may be particularly advantageous in any of the following situations: where the devices are of different ages (hence different physical communication ports are used), where the devices output information in a variety of protocols, or have inbuilt intelligence which is under-utilised due to compatibility and connectivity difficulties.

The apparatus 1, 101, 200, 201, 1023 as provided herein may be for installing into an appliance 109, 309, 1021. This installation may be the attachment of the apparatus 1, 101, 200, 201, 1023 onto, about, in the proximity of, or inside the appliance 109, 309, 1021. In some situations this may include the attachment of the apparatus 1, 101, 200, 201, 1023 inside of an outer cover of an appliance 109, 309, 1021. In other situations the attachment may involve altering the outer cover of the device 109, 309, 1021. In other embodiments the apparatus 1, 101, 200, 201, 1023 is installed by being attached to the outer surface of the appliance 109, 309, 1021. This attachment may be permanent, semi-permanent, or temporary.

### Communication apparatus

The communication apparatus 2 of the processing apparatus 1 may comprise various communication capabilities to facilitate communications between different devices. These may include wired communications (such as electronic communication lines, powerline communication, or optical fibre) and/or wireless communications. Examples of communication capabilities for use with wired communications include communication ports for connecting to the serial port of an appliance, including any existing BMS appliance, HVAC appliance, or electronic appliance. Also included are communication ports such as RS485 communication ports, RS232 communication ports, or USB ports. Further examples include ports for communication with networks, such as Ethernet ports. Examples of wireless communications include, but are not limited to, radio frequency transmission, infrared transmission, or other communication technology. The communication apparatus 2 described herein can include transmitters and receivers for radio and/or other communication technology and/or interfaces to couple to and communicate with communication networks.

The communication apparatus 2 may communicate with other electronic devices, for example, over a network. A network can be a small system that is physically connected by cables or via wireless communication (a local area network or "LAN"). In some examples the processing apparatus 1 of each appliance may act as a node in a mesh network. An electronic device can be a part of several separate networks that are connected together to form a larger network (a wide area network or "WAN"). Other types of networks of which an electronic device can be a part of include the internet, telcom networks, intranets, extranets, wireless networks, and other networks over which electronic, digital and/or analog data can be communicated. The communication apparatus 2 may output the data via Wi-Fi, and/or mesh Wi-Fi, and/or Ethernet, and/or via TCP/IP, and/or Bluetooth, and/or using the Thread network protocol. In a particular embodiment, the communication apparatus 2 may be able to communicate BACnet over mesh Wi-Fi, and may also be able to communicate via Bluetooth.

In some embodiments the communication apparatus 2 is able to transmit both via wireless communication and wired communication, for instance to a cloud network and to an Ethernet network. The communication apparatus 2 might output the data to one or more networks, which might include a wired network and/or cloud services.

The communication between the communication apparatus 2 and other devices may be unidirectional or bidirectional. The communication apparatus 2 may be configured to only receive information via some communication methods or protocols, only transmit information via different communication methods or protocols, or for some communication methods and protocols both transmit and receive data.

The communication apparatus 2 provided herein can communicate with other electronic devices using a variety of communication protocols. A set of standardized rules, referred to as a protocol, or a method, can be used utilized to enable electronic devices to communicate. In some embodiments the first communication protocol is the communication protocol inherent to the appliance; this may be the industry standard protocol. The ability of the processing apparatus 1 to communicate with the electronic equipment using the first communication protocol may be determined by the configuration data 4, or may be pre-determined by software loaded onto the processing apparatus 1.

A second communication protocol may be used by the processing apparatus 1 to communicate with remote devices. This may be any protocol or standard, or combination of protocols or standards. The communication may be via a common IP protocol that is shared between multiple processing apparatus in a system of multiple HVAC appliances. The communication may be TCP/IP communication. The second communication protocol may also be a protocol suitable for communicating with a mobile device, or with cloud services. The second communication protocol may be determined by the configuration data, or may be pre-determined by the software loaded onto the apparatus.

Examples of standards used to as the second communication protocol include HVAC industry open standards. For instance: standards such as BACnet, Modbus, or Danfoss.

### Processor

The apparatus 1 comprises a processor 3. This processor 3 may comprise several modules including a message broker. The message broker may be a module that allows the processing of the information received from the appliance for output, for instance to existing management systems. The message broker may be a module that also, or in the alternative, allows data received from remote devices, networks, cloud services, or from BMS systems, to be processed for communication to the appliance. The processor 3 may be configured to process data in a particular way by the configuration data 4, which may be in the form of a locally stored licence file.

The processor 3 is preferably able to process data into a format compatible with existing BMS systems. For instance, BMS systems may include inherent layers, which from top to bottom include graphics, alarms, schedules, programme, and history logs. The processor 3 may be able to organise received data into conformation with this format.

Further optional roles of the processor 3 will be further discussed below, and can include processing the data in accordance with one or more sets of instructions pre-loaded onto the memory 6 and/or instructions comprised within configuration data 4 for local or external storage. The processor 3 may able, potentially based on instructions comprised within configuration data 4, select specific information or parameters within the data for processing, storage, output, or deletion.

The processor 3 may form part of a computer system. The computer system may include various combinations of a central processor or other processing device, an internal communication bus, various types of memory or storage media (RAM, ROM, EEPROM, cache memory, disk drives, etc.) for code and data storage. The computer system can also include a central processing unit (CPU), in the form of one or more processors, for executing program instructions. The computer system, electronic device, or server can include an internal communication bus, program storage and data storage for various data files to be processed and/or communicated. The computer system can include various hardware elements, operating systems and programming languages.

The apparatus 1 can comprise an operating system. The operating system can be a real-time, multi-user, single-user, multi-tasking, single tasking, distributed, or embedded. The operating system (OS) can be any of, but not limited to, Android ®, iOS ®, Linux ®, a Mac operating system, a version of Microsoft Windows ®. The systems and methods described herein can be implemented in or upon computer systems. In a particular embodiment the apparatus 1 has an embedded real-time operating system.

There is also presented an apparatus 1 for installing into a building management system appliance wherein the apparatus 1 configured to receive the configuration data 4. An example of this apparatus 1 is shown in figure 1b.

The ability to configure the apparatus 1 for use with a specific appliance allows for a single apparatus 1 that has the flexibility to be used with a wide range of different types of appliance; the apparatus 1 is therefore universal. In the absence of this feature, installation would be more complex, as the apparatus 1 would need to be matched to the appliance, and costs would be higher.

The universal apparatus 1 presented herein, can be used with different types of appliance that may output data in proprietary data formats that are different from and incompatible with the formats used by other hardware within the same system. The apparatus 1 can also be simply installed, as a universal apparatus 1 is installed to the hardware to be managed and configuration data 4 is then received by the processor 3.

In addition to determining the methods of communication of the apparatus 1, or in the alternative, the configuration data 4 may also determines how the data in handled. This allows the control of exactly how the apparatus 1 operates.

### Configuration data

Configuration data 4 is data that configures the apparatus 1 for a particular use, for instance with a particular appliance. The configuration data 4 may be used to determine the first communication protocol(s) used to communicate with the electronic equipment. The configuration data 4 may be used to determine the second communication protocol(s) used to communicate with remote devices. The configuration data 4 may contain information defining the format of the appliance; the format may include the port type(s), the protocol type, and the required software for communication. The configuration data 4 may, therefore, allow the apparatus 1 to communicate with the appliance using the industry standard protocol.

The configuration data 4 may be used to inform the apparatus 1 of the parameters to be received within the data received from the appliance. The configuration data 4 may inform the apparatus 1 of how to process each of said parameters. Some parameters may be locally stored, stored on a remote device, or stored with cloud services. Some parameters may be processed for output to remote devices or cloud services, or may be processed to be accessible to third party devices. Some parameters may be disregarded. The configuration data 4 may further comprise embedded software.

The configuration data 4 may comprise information that determines the response of the apparatus 1 to a communication from a remote device. For instance, upon receipt of a communication from a remote device, the apparatus 1 may, based upon the information contained within the configuration data 4: output some parameters received from the appliance and stored upon the device, communicate with the appliance, request data from the appliance, forward data received from the appliance in response to a communication, communicate with the remote device, or request data from the remote device.

The configuration data 4 may alter the response of the apparatus 1 depending on the nature of the remote device with which the apparatus 1 is in communication. For instance, different parameters may be output in response to a request from a network versus a request from a mobile device. In another example, in response to a request from a particular type of remote device, the apparatus 1 may send data comprised within the internal memory 6, but in response to the same request from a different type of remote device, the apparatus 1 may request information from the appliance.

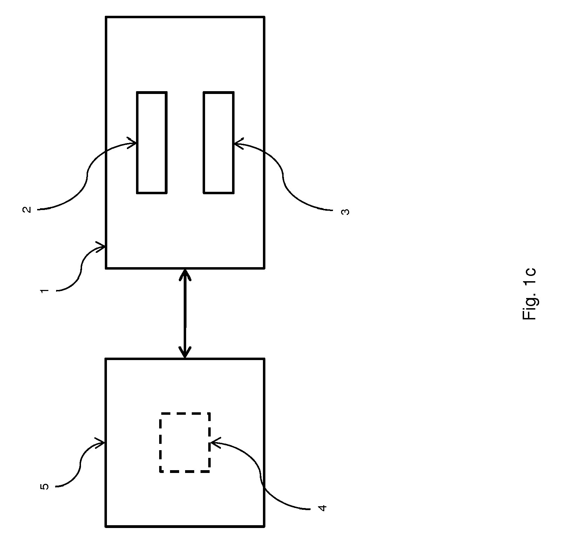

There is presented an embodiment of the apparatus 1, wherein the configuration data 4 is received by the apparatus 1 from a remote device 5. An example of this apparatus 1 is shown in figure 1c.

The receipt of the configuration data 4 from a remote device 5 further increases the flexibility of the apparatus 1, and the simplicity of the installation. The apparatus 1 can be installed onto any suitable appliance, and configuration data 4 subsequently acquired from the remote device 5, hence reducing the need for involvement by the person installing the apparatus 1.

This feature also allows the device to be updated/configured at a later date. The configuration data 4 can contain instructions on how data should be processed, and how the apparatus 1 should respond to communications from the appliance or remote devices. These instructions may differ between different appliances and may need to be modified subsequently after installation of the apparatus 1. The ability of the apparatus 1 to receive the configuration data 4 from a remote device 5 allows for these benefits.

The configuration data 4 may be received from internal data storage, external data storage, or removable data storage.

The apparatus 1 may be pre-loaded with the configuration data 4 prior to installation. The configuration data 4 may be obtainable from remote devices 5, including services for instance cloud services. The configuration data 4 may be obtainable from a network with which the apparatus 1 is in communication. The configuration data 4 may be obtainable from an electronic device in the possession of the person installing the apparatus 1 to the appliance, which may in turn obtain the configuration data 4 from further remote devices 5, including services such as cloud services or the internet.

Alternatively, or in addition, the configuration data 4 may be contained upon a removable data storage device, such as a memory card. The removable data storage device may be attached to the apparatus 1 allowing the configuration data 4 to be accessed by the apparatus 1. The memory card may be an SD memory card. In some embodiments the complete configuration instructions may be contained within the removable data storage device. In other embodiments, the removable data storage device may also comprise instructions so that the apparatus downloads further data, such as software or a licence file, from remote devices, networks, or cloud services.

There is presented an embodiment of the apparatus 1, wherein the apparatus 1 is configured to receive the configuration data 4 from the remote device 5 upon sending a communication to the said remote device 5.

This feature enables the apparatus 1 receive the configuration data 4 from the remote device 5. This feature further increases the simplicity of installation by reducing the need for intervention from the person installing the device, as it removes the need for third parties to communicate with the remote device 5 indicating the configuration data 4 required.

The apparatus 1 may send a communication to a remote device 5 in order to receive the configuration data 4. The communication may comprise identifying information in relation to the host appliance, such as a serial number or version number. The communication may comprise information, such as a serial number or version number, allowing the identification of the apparatus 1 itself.

There is presented an embodiment of the apparatus 1, wherein the apparatus 1 is configured to receive the configuration data 4 from the remote device 5 upon sending a communication to the said remote device 5, and wherein said communication comprises a request for the configuration data 4.

This embodiment further increases the ease of installation, the request being incorporated into the communication enables the apparatus 1 to automatically, or potentially in response from a manual instruction from the person installing the device or from the management system, request the required configuration data 4. The result of this feature is that the person installing the device is not required to intervene much or at all with the configuration of the apparatus 1 to the specific piece of hardware or to the specific role.

The communication requesting configuration data 4 may be sent automatically by the apparatus 1 upon receipt of the information identifying the appliance. Alternatively, the apparatus 1 may communicate with an electronic device in the possession of the person installing the apparatus 1, such as a mobile device or a tablet, and either await a communication from the electronic device before sending a request for configuration data 4, or await the electronic device itself sending a request to a remote device 5 for configuration data 4.

There is presented an embodiment of the apparatus 1, wherein the configuration data 4 is received by the apparatus from a remote device 5 and the configuration data 4 comprises a licence associated with the appliance.

Including a licence within the configuration data 4 can allow the identification of the apparatus 1 in question, and the use to which it is being put, enabling the manufacturer to establish a relationship with the eventual customer. In combination with other optional features, discussed further below, the manufacturer is then able to directly send data and information to the eventual customer, via the apparatus 1. The licence also allows the original manufacturer to identify devices that might require software updates, or other updates produced after the date of installation of the apparatus 1, and can directly update the device, if desired.

A licence may be a computer file, and may be in any file format. The file may be a CFG file. The licence, once delivered to the apparatus 1, may contain information accessible to remote devices indicating the identity and the version information associated with the apparatus 1. The licence, one delivered to the apparatus 1, may contain information accessible to remote devices, indicating the identifying and version information associated with the appliance.

The licence file may comprise configuration data 4, as described herein.

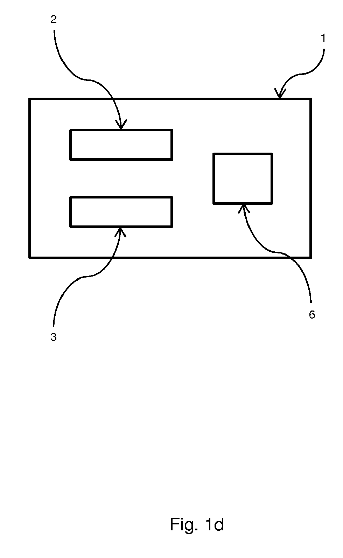

There is presented an embodiment of the apparatus 1, wherein the apparatus comprises memory 6 for data storage. An example of this apparatus is shown in figure 1d.

The memory 6 may allow the device to store data, such as configuration data, so that the processor 3 has access to configuration data. The memory 6 also can have other functions, such as the storage of data such that it is accessible to remote devices or networks, such as the building management system.

The memory 6 for data storage may be any physical media or any format. The storage media may be semiconductor memory, magnetic storage, or optical storage. The apparatus 1 may comprise flash memory for data storage. The apparatus 1 may comprise more than one type of data storage in any combination. The data may be stored in any suitable format. The data may be stored in a format that is suitable for sharing with remote devices, or suitable for sharing with BMS systems. The data store may have XML data sharing with BIM. The data storage may be at least in part allocated for the storage of configuration data or a licence file. The data storage may be at least in part allocated for the storage of data to be shared with building information management design software, and be used for passing relevant information. The data storage may have a section allocated to the configuration data and a section allocated to the storage of data to be shared.

The memory 6 may be removable, and so the apparatus 1 may comprise a socket for the attachment of the memory 6.

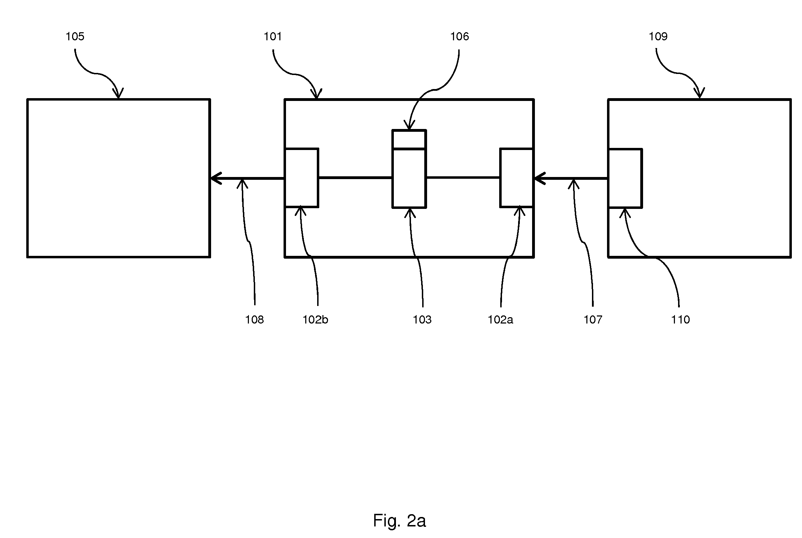

There is also presented an apparatus 101 for interfacing with hardware 109 (also referred to herein as electronic equipment). An example of this apparatus 101 is shown in figure 2a. The hardware 109 is configured to interact with a physical process, for example an environmental factor associated with a building, and has communications apparatus 110 configured to operate in accordance with a first communication method 107. The apparatus 101 comprises, a memory 106, a first communications apparatus 102a configured to operate in accordance to the first communications method 107 and receive data from the communication apparatus 110 of the hardware 109; the received data associated with the operation of the hardware 109. The apparatus 1 also comprises a second communication apparatus 102b configured to output data according to a second communication method 108 that is different to the first communication method 107. The apparatus also comprises a processor 103. The processor 103 is configured to process the received data based upon configuration data, the configuration data being associated with the hardware 109. The processor 103 is further configured to generate output data from the organised data wherein the said output data is transmitted using the second communication apparatus 102b to a remote device 105 different to the hardware 109.

The said apparatus 101 may also be termed a data processing apparatus.

There is presented an embodiment that comprises a first communications apparatus 102a. The first communications apparatus 102a can comprise features that allow the connection of the apparatus 101 to the data output port of the hardware 109, hence allowing the first communications apparatus 102a to receive data from the communication apparatus 110 of the hardware 109. The data can then be passed to the processor 103, which is able to act as a message broker. This has the advantage that the first communication apparatus 102a can receive the data from the hardware 109 in the communication protocol 107 inherently used by said hardware 109, and before output, the processor 103 is able to convert the data such that it can be output using a second communication protocol 108, such that the data is suitable for transmission to management software.

The advantages of such an outcome are discussed above. This particular embodiment has additional advantages in that the data to be output is organised according to the configuration data that is specific for the hardware 109. This can mean that only certain parameters are output to the remote device 105, some parameters may be stored locally, some parameters may be stored remotely, or some parameters may be discarded. Thus the intelligence of the apparatus 1 is utilised so that the hardware 109 is integrated into the management system in the most efficient and useful manner, and the data output by the hardware 109 is processed in the most appropriate manner.

Hardware 109, as used herein, can be electronic device or equipment. The hardware 109 may be a BMS appliance such as an HVAC appliance as defined above or other electronic equipment such as lab equipment.

The first communication apparatus 102a may be configured to receive data from the hardware 109 with which the apparatus 101 is interfaced. To achieve this, the first communication apparatus 102a may include components, such as communication ports, that are suitable for connection to hardware, appliances, BMS appliances, or HVAC appliances. This may include communication ports such as RS485 communication ports, RS232 communication ports, or USB ports.

The first communication apparatus 102a may comprise various communication capabilities to facilitate communications between different devices. These may include wired communications (such as electronic communication lines, powerline communication, or optical fibre) and/or wireless communications.

The second communication apparatus 102b, which may in some embodiments form part of a communication apparatus 2 also comprising the first communication apparatus 102a, may comprise various communication capabilities to facilitate communications between different devices. The communication may be one-way, i.e. only outputting data, or may be two-way allowing communication between the apparatus and other devices. The various communication capabilities may include wired communications (such as electronic communication lines, powerline communication, or optical fibre) and/or wireless communications. Examples of wireless communications include, but are not limited to, radio frequency transmission, infrared transmission, or other communication technology. The hardware described herein can include transmitters and receivers for radio and/or other communication technology and/or interfaces to couple to and communicate with communication networks.

The second communication apparatus 102b may communicate with other electronic devices, for example, over a network. A network can be a small system that is physically connected by cables or via wireless communication (a local area network or "LAN"). An electronic device can be a part of several separate networks that are connected together to form a larger network (a wide area network or "WAN"). Other types of networks of which an electronic device can be a part of include the internet, telcom networks, intranets, extranets, wireless networks, and other networks over which electronic, digital and/or analog data can be communicated. The second communication apparatus 102b may output the data via Wi-Fi, and/or mesh Wi-Fi, and/or Ethernet, and/or via TCP/IP, and/or Bluetooth, and/or using the Thread network protocol. In some embodiments the second communication apparatus 102b is able to transmit both via wireless communication and wired communication, for instance to a cloud network and to an Ethernet network. The second communication apparatus 102b might output the data to one or more networks, which might include a wired network and/or cloud services.

In an embodiment, received data is associated / formatted according to a first communication protocol 107 associated with the first communication apparatus 102a.

This feature enables the first communication apparatus 102a to communicate using the communication protocol 107 that is inherent to the communication apparatus 110 of the hardware 109. Thus, the apparatus 101 is able to communicate fully with the hardware 109.

In an embodiment, the output data is associated / formatted according to a second communication protocol 108 associated with the second communication apparatus 102b.

This feature allows output of data that is formatted in a manner that is suitable for the devices intended to receive the data, for instance a central communication hub, a management system, a mobile device, or cloud services. This is an advantageous feature as it allows the output of data that ultimately was associated with the hardware 109 to be controlled, in a format that is capable of being received by a device not specialised for the hardware in question.

The second communication protocol 108 can be any protocol or standard. The communication may be via a common IP protocol. Examples of standards used to transmit the information include HVAC industry open standards. For instance, the information may be transmitted using standards such as BACnet, Modbus, or Danfoss.

In a particular embodiment, the second communication apparatus 102b can communicate via TCP/IP, Wi-Fi, and Bluetooth.

In a particular embodiment, the apparatus 102b may be able to communicate BACnet over mesh Wi-Fi.

The apparatus 101 is able to process data into a format compatible with existing BMS systems. For instance, BMS systems may include inherent layers, which from top to bottom include graphics, alarms, schedules, programme, and history logs. The apparatus 101 may be able to output data that conforms to this format.

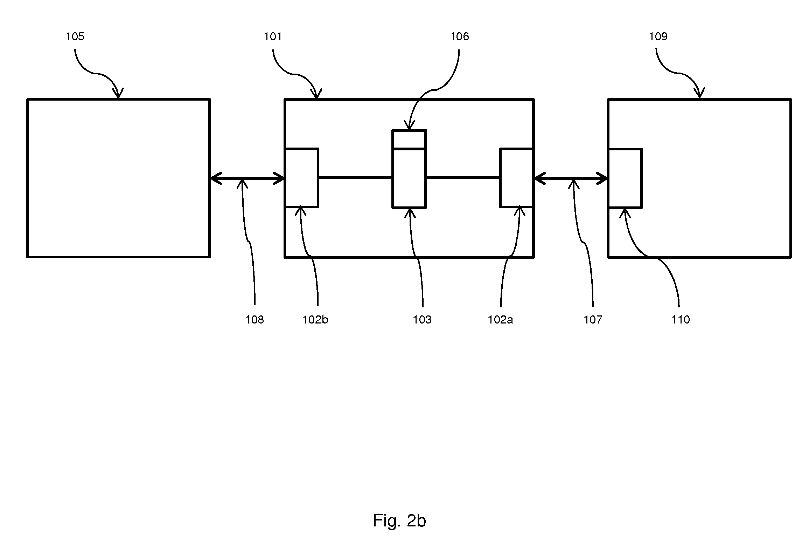

In an embodiment, the apparatus 101 is configured to transmit the output data to the remote device 105 upon receiving a communication from the remote device 105. An example of this apparatus 101 is shown in figure 2b.

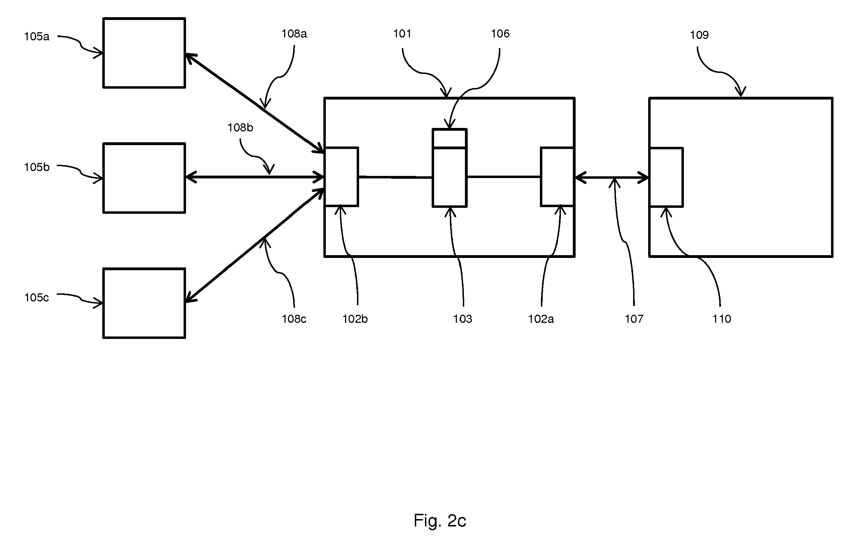

In an embodiment, the apparatus 101 is configured to transmit output data to one or more of a plurality of remote devices 105, 105a, 105b, 105c. An example of this apparatus 101 is shown schematically in figure 2c.

The ability of the apparatus 101 to transmit output data to plurality of remote devices 105, 105a, 105b, 105c allows the device to be used with, for instance, a central communication hub connected to a management system, cloud services, and a mobile device simultaneously. This leads to flexibility as the apparatus 101 can communicate with the central management system for ordinary management while being able to interact with and be controlled by a user, which could be the person installing the device or an end user. The apparatus 101 may also be able to interact with cloud services, through which the apparatus could download configuration data during installation, or further/updated configuration data after installation.

The communication with a device for use by the person installing the apparatus 101, or the end user, allows further functionality. The person installing the apparatus 101 can communicate with the apparatus 101 to ensure that it is installed and configured correctly. The person installing the apparatus 101 may also be communicating with existing installed apparatuses, to check their status. The person installing the apparatus 101 may also be able to run checks on the functionality of the installed apparatus 101. Finally, and as is discussed further herein, the person installing the device may be able to manually create relationships between devices.

The communication with a device for use by an end user is desirable as this enables the end user to directly instruct the apparatus 101 and hence change the activity or status of the hardware 109.

It has been described above, that the apparatus 101 is able to communicate with management systems, cloud services, networks, and similar. The apparatus 101 may also be able to communicate with a device for use by the person installing the apparatus 101, or the end user. This device may be for example: a computer, desktop computer, laptop computer, notebook computer, minicomputer, mainframe, multiprocessor system, network computer, e-reader, netbook computer, or tablet. The electronic device can be a smartphone or other mobile electronic device. The communication between the apparatus 101 and the device may be via any method or any protocol 108 as described above in relation to the communication apparatus for outputting the second data. In some embodiments the communication between the apparatus 101 and the device may be via wireless communication, for instance Wi-Fi or Bluetooth.

The device for use by the person installing the apparatus may include software, such as an application, allowing the user to interact with the apparatus 101.

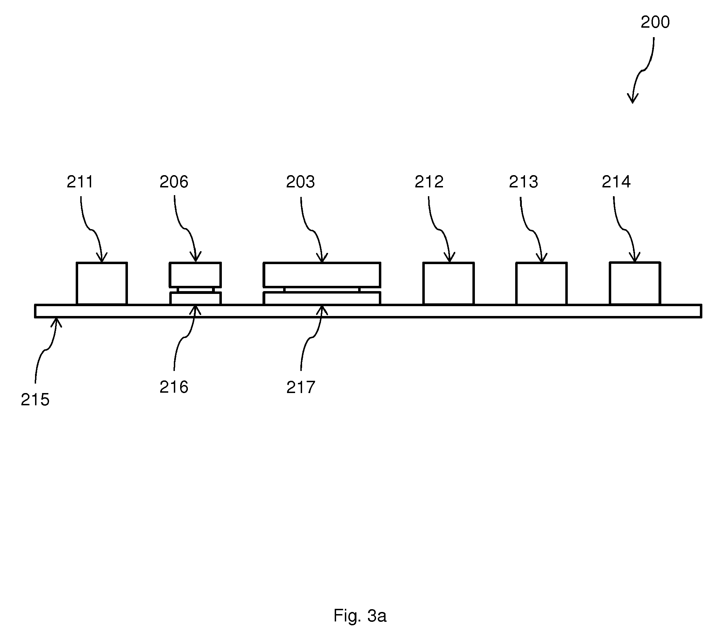

The apparatus 201 as described herein may comprise a board computer 200, such as depicted in Fig. 3a. A board computer 200 in this example includes a printed circuit board 215, upon which the required components are mounted. The components may include communications ports 211, 212, 214, power connectors 213, sockets 216, 217, processors 203, or memory apparatuses 206. The sockets 216, 217 may be for receiving memory 206, processors 203, or other components. The communication ports may include an Ethernet port 211, a USB port 212, a second communications port 214, any serial ports, and/or any combination of communication ports.

A board computer 200 is capable of performing all of the functions described above, and is also small, lightweight, easy to produce, and versatile.

In an embodiment, the board computer 200 can be comprised within an outer case 218.

The case 218 has the advantage of protecting the board computer 200, and increasing the ease of shipping and handling.

The apparatus 201 may comprise an outer case or outer cover 218. The case or cover can be constructed of any material having suitable properties, such as plastics or metals.

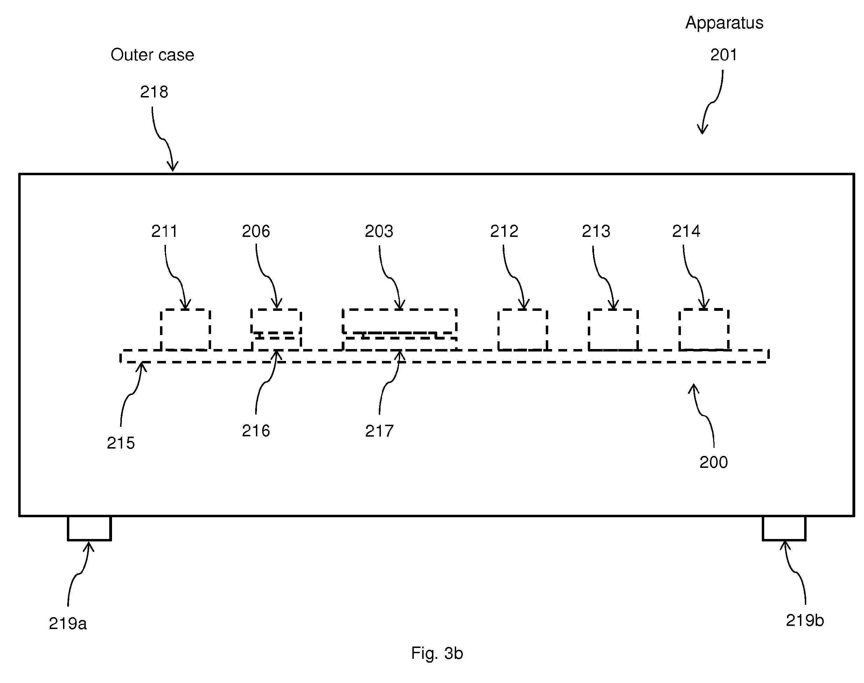

The outer case 218 can, in some embodiments, include attachment means 219a, 219b to allow the case 218 to be attached to an appliance. This is schematically represented in Fig. 3b. The attachment means 219a, 219b allow a simple installation of the apparatus 201 to the appliance.

The apparatus 201 may comprise means for installing 219a, 219b the apparatus 201 into an appliance. This may include fastening means, fixing means, or adhesion means. For instance the apparatus 201 may be configured to be attached by screws, nuts and bolts, or hook and loop fasteners. The apparatus 201 may include adhesive pads, or be configured so that adhesive substances can be administered prior to installation. The apparatus 201 may comprise magnets, so that the apparatus 201 can be securely attached to a building management system appliance.

### Example of an apparatus

In a particular embodiment, the apparatus comprises a first communication apparatus that includes a RS485 communication port for connecting to the serial port of an HVAC appliance, such as a boiler, and wherein the communication apparatus communicates with the appliance using the industry standard protocol determined by a downloaded licence file stored within flash memory comprised within the apparatus. The apparatus also comprises a second communication apparatus that communicates using standard IP protocols in a format required by existing BMSs. The second communication apparatus can communicate with remote devices using Ethernet, Wi-Fi, and Bluetooth. The second communication apparatus is able to communicate with the BMS, cloud services, and with mobiles devices comprising a downloadable software application.

The apparatus comprises a processor that includes a message broker module allowing the communication of information from the HVAC appliance to the remote devices, and from the remote devices to the HVAC appliance.

The apparatus has data storage capacity in the form of flash memory. The data storage is for the aforementioned storage of configuration data in the form of software and a licence file. The data storage is also for the storage of information in an accessible format, such as XML, so that remote devices have access to relevant data in relation to the HVAC appliance.

The apparatus also has a slot allowing the attachment of a memory card.

The apparatus is contained within a metallic outer case. The metallic outer case is attachable to an HVAC appliance via magnets.

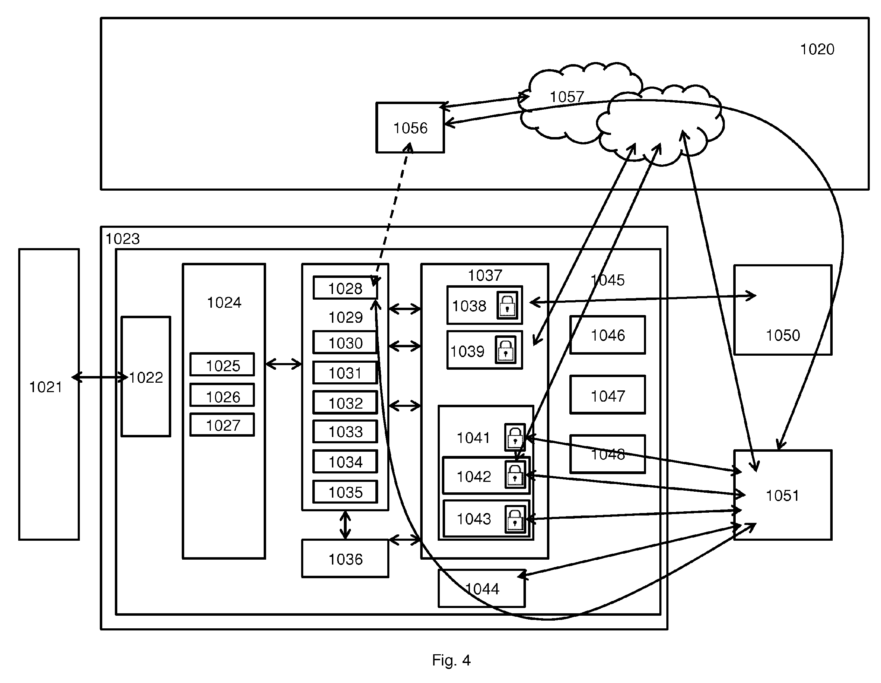

In a particular embodiment, the apparatus is as depicted in figure 4 as a functional block diagram. The example in figure 4 is one way that the apparatus may be configured to operate. Some of the modules and features shown in figure 4 and described below may not be included in other example or may be modified. Apparatus comprises a universal embedded intelligence board 1023 whereby different modules are hosted. The universal embedded intelligence board comprises I/O to TTL serial module 1022 for communication with an electronic equipment 1021 as described elsewhere herein, for example an HVAC appliance or other BMS appliance. The module 1022 operates to change the incoming/outgoing communication from one voltage signal level to another voltage signal level. Module 1024 is configured to recognise the signals output from module 1022 and transforms or interprets the signals into signals recognisable by a further communication method, such as BACnet. In this example several format choices may be selectively available including, but not limited to BACnet 1025, Modbus MS/TP 1026 and Danfoss FC 1027.

Module 1029 is the message broker which may have a number of modules including, but not limited to license file 1028, which is described elsewhere herein. The license file 1028 in this example may contain data enabling elements that are used by the control algorithm 1031 to perform functions. It may provide lists of data to perform certain functions upon, for example store values a-C and transmit values E-G to the cloud. The license file may be different for different uses of the electronic equipment. For example a different license file for the same electronic equipment may be available depending on the type of installation or another factor. One installation could be for a small building and another license file could be for a large building. Each license file providing configuration data that allows the processing apparatus to manage data and/or allow levels of control of the equipment that may be different to the other license file.

When a license file is not uploaded to the processing device then it may be configured to transmit signals to remote devices and services indicating that is it a processing device (i.e. that the signal originates from the processing device and that identity information contained in the output signal is that for the processing apparatus, for example a make and/or model number). This output signal may be accompanied by further data indicating that the processing device is connected to an electronic equipment. This output signal may be accompanied by further data indicating the type of electronic equipment connected to the processing device.

Once a license file is uploaded to the processing apparatus then the identity information provided in signals output to remote devices/services, from the processing device, may only be the identity of the electronic equipment and may not contain identity information about the processing apparatus. i.e. to the outside world, once the license file has been uploaded to configure the processing apparatus for use with the particular electronic equipment, the processing apparatus appears to be part of the electronic equipment.

Module 1030 is a software module that interprets how the flow of information is handles, for example a nano-messaging block mechanism.

Module 1031 is the control algorithm software module which implements the control functions with inputs from the license file and data coming in from the remote device.

Module 1032 is a software module that drives on board LED's based on a set of rules and an input from the control algorithm.

Module 1033 is a schedule software module having stored operational based data for use with the control algorithm so that the control algorithm performs actions correctly based on schedule info, for example time scheduled information.

Module 1034 is a history module that determines where and what data is stored relating to previous executed operations of the electronic equipment.

Module 1035 is an alarms software module for interpreting when to raise an alarm (visual, audio or otherwise) based on the first set of instructions held on the processing apparatus and/or configuration data from the licence file. This may be for example if the boiler associated with the processing apparatus has not fired yet and raising an alarm to a local mobile device.

Module 1036 is a database storage.

Module 1037 is a network protocol stack where module 1038 is a bi directional BACnet IP interface making the overall electronic equipment (with the processing apparatus) compliant to BMS infrastructures. It does this over IP and allows for external control signals from remote devices and services to control (or influence the running of) the control algorithm.

Module 1039 is a cloud initiating and communicating software module.

Module 1041 is a software module to allow mobile and tablet access.

Module 1042 is a software module allowing for data to be output advertising the capabilities or data available via the processing apparatus. For example this could be a smart city interface, e.g. Hypercat.

Module 1043 is a software module that allows data from sensors to be used by the processing apparatus. The module may find other local sensors as well as allow their data to be used by the processing apparatus in the control of the electronic equipment. This could be for example a Threads protocol.

Module 1044 is a Bluetooth ® beacon for allowing mobile devices in the physical vicinity to know the processing apparatus is there.

Module 1045 is the operating system such as a Linux ® OS.

Module 1048 is a software module to allow the processing apparatus to become a node in a mesh network.

Module 1047 is a real time clock, an on-board clock to provide a time value to the other modules.

Module 1046 is a software module that allows the processing device, acting as a mesh node, to become a gateway to the internet or wider network. For example, in an HVAC system where there are a plurality of boilers (each with its own processing device), only 1 boiler needs to be a gateway through which the data from any of the boilers may be accessed by a remote device. This module allows a processing apparatus to be a gateway for other local equipment with processing apparatus.

Reference 1050 is a computer terminal with BMS software. Reference 1051 is a tablet or other mobile device.

Reference 1020 depicts various cloud based services that the processing apparatus may to interact with, for example by downloading data from or uploading data to the cloud.

Reference 1056 refers to a license service. This service stores licenses in the cloud for access by manufacturers to amend and for processing apparatus or mobile devices to download from via a web portal 1057. If the control algorithm 1031 needs updating or replacing this can also be done by a cloud service which can also be the license service 1056.

The embodiments disclosed herein are intended to illustrate the features of the invention. The invention may comprise any combination of the disclosed features of the embodiments.

### Example of a system

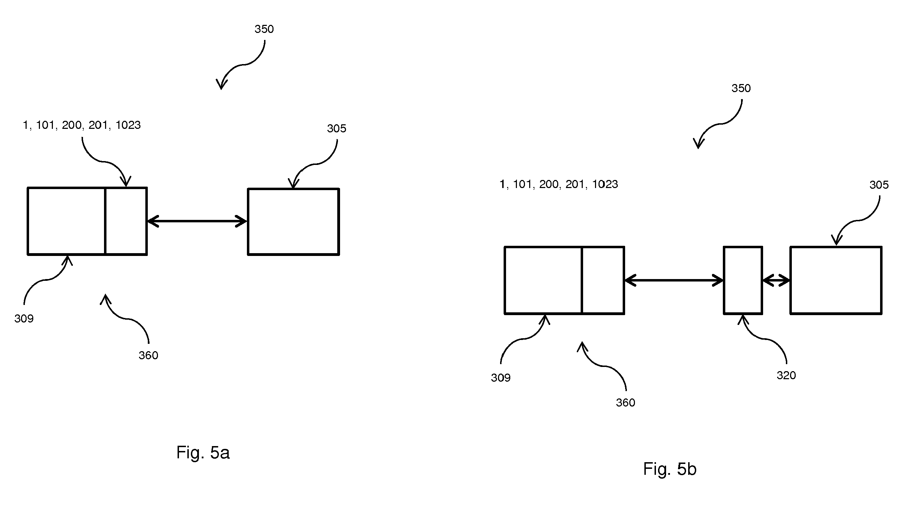

In another aspect, there is provided a system 350 comprising a management system 305 and one or more electronic appliances 309, wherein an apparatus 1, 101, 200, 201, 1023 as described herein is installed to each appliance 309. An example of this system 350 is shown schematically in figure 5a. Optionally, information is transmitted from an apparatus 1, 101, 200, 201, 1023 to the management system via a communications hub 320. An example of this system 350 is shown schematically in figure 5b.

The management system 305 may be a building management system, but the system 350 described herein is also suitable for use with a management system in general. The system 350 can be any system involving multiple electronic devices, some of which may have inbuilt intelligence and operate using different communication protocols, wherein the system is centrally managed.

The system 350 provided herein includes electronic appliances 309, which may be those described above, which are managed by a central computing system 305. In this system 350, each appliance 309 is associated with an apparatus 1, 101, 200, 201, 1023 as described above, which has been installed to the appliance 309, as described above.

The management system 305 may be a BMS, and may be for the purpose of managing HVAC devices. The management system 305 may also, or in the alternative, manage other systems, such as lighting, fire, intruder detection, CCTV, and similar. Alternatively, the management system 305 may be for the management of factory equipment or laboratory equipment.

The technical advantages inherent to such a system 350 have been described in relation to the presently described apparatus 1, 101, 200, 201, 1023 that allows such a system to be formed. Further advantages will be discussed in relation to the embodiments and examples.

The system 350 may operate by communication between a communication hub 320 and each of the apparatuses 1, 101, 200, 201 1023 as described herein. The communication can be via any method, or a method as described above. The system 350 may comprise various communication capabilities to facilitate communications. The various communication capabilities may include wired communications (such as electronic communication lines or optical fibre) and/or wireless communications. Examples of wireless communications include, but are not limited to, radio frequency transmission, infrared transmission, or other communication technology. The system 350 described herein can include transmitters and receivers for radio and/or other communication technology and/or interfaces to couple to and communicate with communication networks.

The system 350 may comprise devices that communicate, for example, over a network. A network can be a small system that is physically connected by cables or via wireless communication (a local area network or "LAN"). An electronic device can be a part of several separate networks that are connected together to form a larger network (a wide area network or "WAN"). Other types of networks of which an electronic device can be a part of include the internet, telcom networks, intranets, extranets, wireless networks, and other networks over which electronic, digital and/or analog data can be communicated. The communication between the central communication hub 320 and the appliances may include communication via Wi-Fi, and/or mesh Wi-Fi, and/or Ethernet, and/or via TCP/IP, and/or Bluetooth, and/or using the Thread network protocol. In some embodiments the system includes both a wired and a wireless network.

The communication between the central communications hub 320 and the appliances may use any protocol or standard. The communication may be via a common IP protocol. Examples of standards used to transmit the information include HVAC industry open standards. For instance, the information may be transmitted using standards such as BACnet, Modbus, or Danfoss.

The system may include peer-to-peer communication, for instance between an apparatus, as described herein, and another apparatus. This peer-to-peer communication may allow communication between an apparatus and the central communications hub 320 via another apparatus as described herein. This feature may allow the system to have "self-healing" functionality.

In an embodiment, the system may include a thermal mass sensor. The system may use the thermal mass senor to understand how much energy is in the fabric of the building, with the orientation and demographic of the occupants added into real time load profiling, to predict energy consumption. The processing for such a calculation could be performed by the apparatus as described herein.

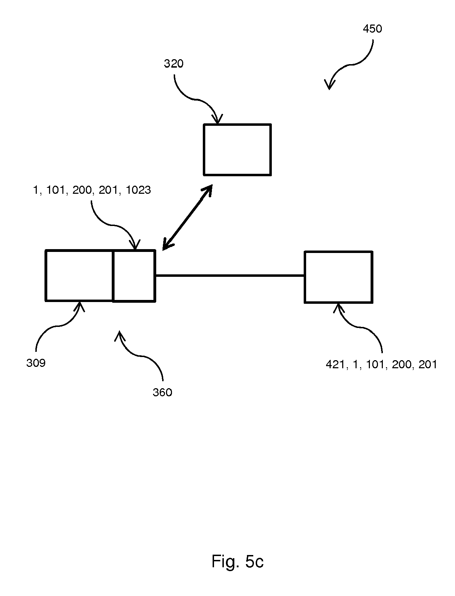

The system 450 may include apparatus 1, 101, 200, 201, 1023, as described herein, that are capable of receiving a communication indicated the purpose of another device 421. The apparatus 1, 101, 200, 201, 1023, upon receipt of the purpose of another device 421, may then be able to automatically or manually form a relationship with the other device 421. A schematic of such a system is shown in Fig. 5c.

This feature allows greater integration of the devices of the system 450, for instance an apparatus 1, 101, 200, 201, 1023 controlling an appliance 309, such as a heating device, can form a relationship with another device 421, such as a temperature sensor. This enables the apparatus 1, 101, 200, 201, 1023 to control the heating device in an intelligent manner based upon the information received from the sensor. Some relationships may be formed with minimal user intervention. Other relationships may be formed manually by the person installing the apparatus 1, 101, 200, 201, 1023 and such relationships may be formed to increase the functionality of the system.

A relationship between apparatuses 1, 101, 200, 201, 1023 or between an apparatus 1, 101, 200, 201, 1023 and a device 421, might enable one apparatus to automatically receive data from the other apparatus 1, 101, 200, 201, 1023 or device 421. This data may be locally stored, or stored externally, for instance by transmission to a remote device or network. The locally stored data may be stored in a format that is accessible to external devices and other apparatus as described herein. The data may be used by the apparatus 1, 101, 200, 201, 1023 to generate a communication for transmission to the appliance 309 to which the apparatus 1, 101, 200, 201, 1023 is installed. This communication may comprise instructions in order to cause the appliance 309 to change status, activities, or other parameters. In this manner, the readings obtained by, for instance, a sensor may be used to automatically adjust the function of an appliance 309.

The communication of the purpose by an apparatus 1, 101, 200, 201, 1023 or other device 421 may comprise an IVP6 address.

The manual creation of a relationship may be due to the intervention of a user or the installer of the apparatus 1, 101, 200, 201, 1023. The manual creation may be via the management system itself, in which case the management system may communicate this relationship to the apparatus 1, 101, 200, 201, 1023 via the central communication hub 320 or via another method. Alternatively, the management system may not communicate the relationship to the apparatus 1, 101, 200, 201, 1023 but instead may manage the relationship at the management system level and communicate instructions to the apparatus 1, 101, 200, 201, 1023. An alternative form of manual creation of a relationship may be performed by the person installing the apparatus onto the host appliance 309. The installer may manually create the relationship and communicate this to the apparatus 1, 101, 200, 201, 1023. The installer may have an electronic device as described above, which may be a mobile device comprising software allowing communication between the mobile device and the apparatus, and so the installer can use said mobile device to manually create the relationship between the apparatus 1, 101, 200, 201, 1023 and another apparatus 1, 101, 200, 201, 1023 or device 421.

In an embodiment there is provided, a system 550 for use with a communications hub 320. The communications hub 320 [this could be whatever the local building had that routed information] for outputting data from a BMS to a device external from the BMS. The system 550 comprises a first appliance 309a wirelessly connectable to the communications hub 320 and a second appliance 309b wirelessly connectable to the communications hub 320. The first appliance 309a is configured to receive first data from the second appliance 309b and transmit second data to the communications hub 320, the second data associated with the first data.

In this system one apparatus 1, 101, 200, 201, 1023 associated with an appliance 309b can communicate via another apparatus 1, 101, 200, 201, 1023 associated with an appliance 309a to the common communications hub 320, where both are initially connectable to the wireless hub (exploiting communication redundancy).

An advantage of the presently disclosed system is that it can form part of a "self-healing" system 550 that can overcome the blocking of the signal between two devices on the network.

For example, a building may contain two appliances 309a, 309b, each with an installed apparatus 1, 101, 200, 201, 1023, and a communications hub 320 allowing communication with a BMS. The appliances may be positioned such that only one apparatus 1, 101, 200, 201, 1023 is able to communicate with the communications hub 320. Alternatively, during installation the apparatuses 1, 101, 200, 201, 1023 of both appliances 309a, 309b might be able to communicate with the hub 320, but a fault or problem may later develop preventing communication between one of the apparatus 1, 101, 200, 201, 1023 and the communications hub 320. In this situation, the presently disclosed system is able to overcome the issue. One apparatus 1, 101, 200, 201, 1023 associated with an appliance 309b is able to communicate peer-to-peer with the other apparatus 1, 101, 200, 201, 1023 associated with an appliance 309a, and the other apparatus is able to transmit the received information to the central communication hub. This therefore allows an appliance to communicate with the central communication hub via an indirect route, which may be via one apparatus or via a chain of other apparatuses.

In an embodiment, the appliance 309a, 309b is any HVAC appliance or device, or a lighting device.

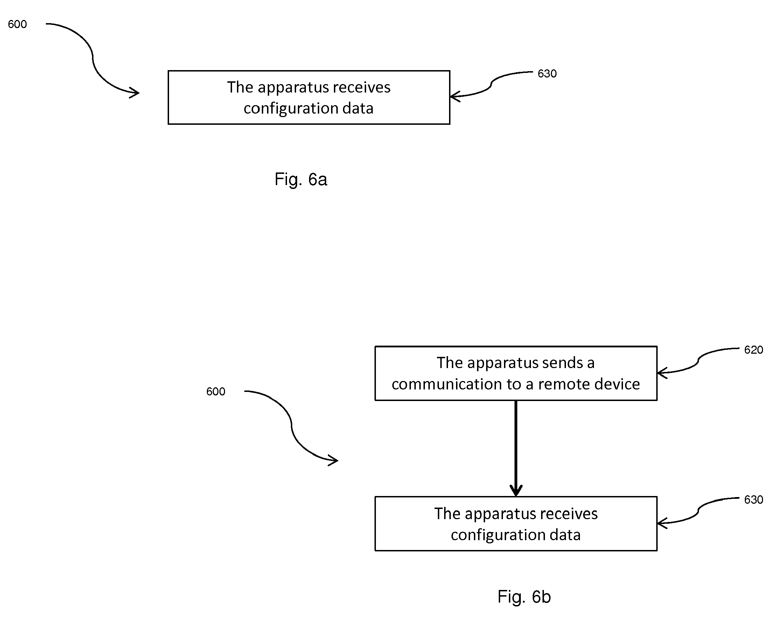

There is provided, in an aspect, a method 600 of configuring an apparatus 1, 101, 200, 201, 1023 as described above, for use with hardware. The method comprising the step: receiving configuration data by the apparatus 630. This method is represented in figure 6a. In an embodiment, the configuration data is received from a remote device or removable data storage 631.

In an embodiment, prior to the above step, the apparatus sends a communication to a remote device 620. This method is represented in figure 6b. This communication to a remote device may comprise information in relation to the hardware to which the apparatus is installed/being installed 621.

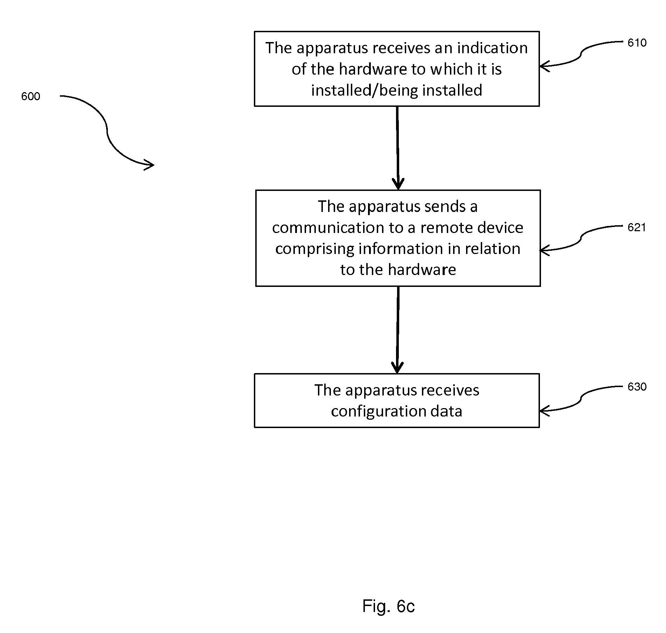

In an embodiment, prior to the two steps described above the method comprises the step of the apparatus receiving an indication of the hardware to which it is installed/being installed 610. This method is represented in figure 6c. In an embodiment, this communication may originate from the hardware itself 611.

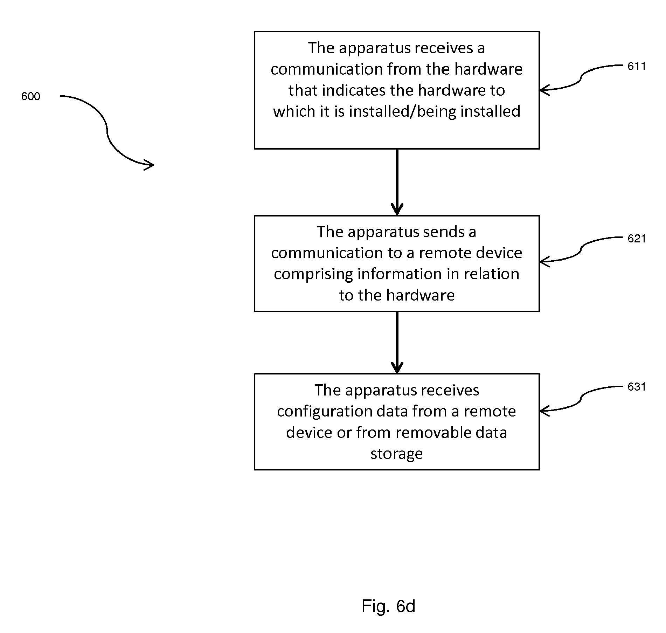

A particular embodiment of the above method is represented in figure 6d.

This method allows the apparatus 1, 101, 200, 201, 1023 to be correctly configured to the hardware 109, 309, 2002, 2004 to which it is installed, with minimal or no involvement from the person installing the device. This enables a single, potentially universal, apparatus 1, 101, 200, 201, 1023 to be distributed, without restricting the diversity of hardware which with the apparatus 1, 101, 200, 201, 1023 can be used, and without increasing the complexity of installation.

Configuration data 4, as used herein, and the potential uses and advantages are described above. The configuration data 4 as received as part of this method may comprise a licence.

As part of the provided method, the apparatus 1, 101, 200, 201, 1023 receives configuration data 4. The configuration data 4 may be received from internal storage 6, 106. The configuration data 4 may be pre-loaded onto the internal storage 6, 106, or may be downloaded. The configuration data 4 may be received from a remote device 5, such as a network, the internet, or cloud services 2012. The configuration data may be received from an electronic device 2008, such as a laptop, mobile device, or tablet, in the possession of the person installing the device. The configuration data 4 may be received by the attachment of removable storage containing the data, such as a memory card or SD memory card.

As part of an embodiment of the provided method, the apparatus 1, 101, 200, 201, 1023 sends a communication to a remote device 5, 105, 305, 320, 1050, 1051, 1020. This communication may comprise a request for configuration data 4. The communication may comprise information identifying the hardware 109, 309, 1021, 2002, 2004 to which the apparatus is installed/being installed; this information may include a serial number and/or version number. The communication may comprise information identifying the apparatus 1, 101, 200, 201, 1023 itself, and this may also include a serial number and/or version number.

The remote device 5 to which the communication is sent may be part of a network, cloud services 2012, or an electronic device 2008 in the possession of the person installing the device, such as a laptop, mobile device, or tablet.

The remote device 5 with which the apparatus communications may be the same device from which configuration data 4 is received, or may be a different device. For instance, the apparatus may communicate with an electronic device 2008 in the possession of the person installing the device, but the configuration data 4 may be received either from this same device or from another device such as a device 2010 connected by the network or connected to cloud services 2012.

The apparatus 1, 101, 200, 201, 1023 may communicate the information identifying the hardware 109, 309, 1021 to the electronic device 2008 in possession of the person installing the device, and the configuration data 4 may then be received due to the installer attaching removable memory comprising the appropriate data to the apparatus 1, 101, 200, 201, 1023.

As part of an embodiment of the provided method, the apparatus 1, 101, 200, 201, 1023 may receive a communication including an indication of the hardware 109, 309, 1021 to which it is attached. This may include the serial number or version of the hardware. In some embodiments the person installing the apparatus 1, 101, 200, 201, 1023 may provide the apparatus 1, 101, 200, 201, 1023 with information identifying the product 109, 309, 1021 to which it is installed/being installed. This communication may be from an electronic device 2008 in the possession of the installer, or may be by the attachment of removable memory.

In other embodiments the hardware 109, 309, 1021 itself may provide identifying information to the apparatus 1, 101, 200, 201, 1023. This may be in the form of information that directly identifies the hardware 109, 309, 1021, such as a serial number, version, or type. In some situations the hardware 109, 309, 1021 may be unable to provide information allowing the direct information, and instead may simply output other forms of data. In these situations the apparatus 1, 101, 200, 201, 1023 may be able to indirectly identify the hardware 109, 309, 1021, based upon comparison of the data output by the hardware 109, 309, 1021 to data known to be output by known hardware types. For instance, a certain type of boiler may not out identifying information but instead simply output a temperature or other status in a particular format. The apparatus 1, 101, 200, 201, 1023 may still be able to identify the boiler based upon this information and the format being characteristic of a certain boiler.

There is provided, in an aspect, a method 700 of processing data received from hardware 109, 309, 1021, for output to a remote device 105, 305, 320. 1) The apparatus receives information from the hardware 109, 309, 1021 in a 1^{st} communication protocol 107 inherent to said hardware 710. 2) The apparatus organises said data according to configuration data 4 associated with the hardware type 720. 3) The apparatus 1, 101, 200, 201, 1023 then transmits the organised data, using a 2^{nd} communication protocol 108 to the remote device 730.

In an embodiment 701, the communication may be in both directions. This means that the apparatus 1, 101, 200, 201, 1023 may also be able to receive data from a remote device 105, 305, 320. The data may be processed according to the configuration data 4. Data may then be output to the hardware 109, 309, 1021.

There is provided a non-transient computer readable medium comprising program code, which when executed by a processor is configured to cause the processor to give effect to any of the methods as described herein.

The systems and methods described herein may include or be implemented in software code, which may run on such computer systems or other systems. For example, the software code can be executable by a computer system, for example, that functions as the storage server or proxy server, and/or that functions as a user's terminal device. During operation the code can be stored within the computer system. At other times, the code can be stored at other locations and/or transmitted for loading into the appropriate computer system. Execution of the code by a processor of the computer system can enable the computer system to implement the methods and systems described herein.

The apparatus 1, 101, 200, 201, 1023, upon receipt of data from the hardware 109, 309, 1021, processes the data in accordance with the configuration data 4. As further described above, the configuration data 4 may determine not only the protocol with which the apparatus 1, 101, 200, 201, 1023 communicates with the hardware 109, 309, 1021, but also may determine how the data is subsequently handled. For instance, the configuration data 4 may determine that the apparatus 1, 101, 200, 201, 1023 should store some parameters received from the hardware 109, 309, 1021, either locally or remotely. Other parameters may be output to specific types of devices. Some parameters may be stored in an accessible format so that they can be accessed by remote devices. Other parameters may be discarded.

Some parameters may be output to a remote device using a 2^{nd} communication protocol 108. This may be, for instance, to a network using TCP/IP, to a communication hub via wireless communication, to an electronic device in the possession of a user, or to cloud services.

In some embodiments, the apparatus 1, 101, 200, 201, 1023 is capable of receiving information from a remote device 105, 305, 320. The information may be processed according to the information itself and/or according to the configuration data 4. For instance, the information may comprise an instruction for the hardware to change status, in which case the apparatus 1, 101, 200, 201, 1023 receives this instruction, may processes the data into a first communication protocol 107 according to the configuration data 4 and may transmits the instruction to the hardware 109, 309, 1021. In other instances that communication from the remote device 105, 305, 320 may be a request for data, in which case the apparatus 1, 101, 200, 201, 1023 may access the data, which may be internally stored or require communication with the hardware 109, 309, 1021, and output the data to the remote device 105, 305, 320. Thus is it possible for the method to consist of the steps of receiving data from the remote device 105, 305, 320, processing the information, and outputting data to the remote device 105, 305, 320, without involvement of the hardware 109, 309,1021.

In other situation the apparatus 1, 101, 200, 201, 1023 may receive a communication from a remote device 105, 305, 320, and the configuration data 4 may determine the further actions of the apparatus 1, 101, 200, 201, 1023. For instance, the communication if received from certain types of remote devices may be ignored, from other types of remote devices the device may send data from internal storage, and for some remote devices the apparatus 1, 101, 200, 201, 1023 may communicate with the hardware 109, 309, 1021 to receive data for output to the remote device 105, 305, 320.

### Example - Installation

In an example, an embodiment of the apparatus 201 can be installed into a building management system appliance (for example 2002 or 2004) as follows. The apparatus is a computer board device 200 within an outer case 218 (for instance a metallic case). The apparatus 201 also has a first set of instructions pre-loaded into its memory 206 governing the general way in which the apparatus functions (for example the code required to communicate with BACnet). The metallic case has attachment means 219a, 219b (for instance magnets) attached to the outside of the case such that the apparatus can be physically attached to the outside of a building management system appliance.

The person installing the device (the installer), therefore, may identify a building management system appliance which requires installation of the presently disclosed apparatus, such as a boiler 2004. The installer may then attach the apparatus 201 to the outer case of the appliance 2004 via the magnets and, in this example, connect an R485 communication port of the apparatus 201 to the output serial port of the boiler 2004.

The boiler 2004 may then be able to communicate the serial number associated with said boiler, or other identification information, to the apparatus 201. The apparatus 201 can process this data, and communicate said data via wireless communication to a mobile device 2008, such as a mobile telephone or a tablet, in the possession of the installer. The information can be communicated to the installer via an App installed upon the mobile device 2008. The App can then, either automatically, or after requiring input from the installer, cause a communication to be sent to a remote device 5 or cloud services 2012 requesting configuration data. The communication may further comprise a serial number associated with the apparatus 201 itself.

The configuration data 4, which can comprise a licence, can then be received by the apparatus 201 either directly, or via the mobile device 2008, or via a third party device (for instance a computer terminal 2010) forming part of a network in communication with the apparatus. The configuration data 4, potentially including the licence file, is then stored by the apparatus in memory 206.

The configuration data 4 is then used to configure the apparatus 201 for use with, in this example, the boiler 2004. This enables the apparatus 201 to determine how to deal with each of the parameters outputted by the boiler 2004. For instance, a particular parameter may be stored within the data storage 206 of the apparatus 201, and may therefore be accessible to third party devices, the cloud 2012, and other apparatus 201 as disclosed herein, that are attached to other appliances (for example a heater 2002). Other parameters may be stored remotely, such as with cloud services 2012. Some parameters may be processed and output without storage.

The apparatus 201 may also be also to receive instructions, for instance from the building management system associated with the building in which it is placed, such as via an Ethernet network or via mesh Wi-Fi. These instructions may then be processed by the apparatus 201 and converted so that they can be communicated in a protocol appropriate to the boiler 2004, the configuration file 4 may contain information in relation to this processing.

The communication from the apparatus 201 to the boiler 2004 can cause a change in the activity of the boiler 2004. For instance, an instruction can be sent from the building management system instructing the boiler 2004 to be switched off, the apparatus 201 may receive this instruction, process the instruction so that it can be communicated to the boiler 2004, communicate the instruction, and hence cause the boiler 2004 to be switched off.

In an alternative example to that described above, the installer may install an embodiment of the presently disclosed apparatus 1, 101, 200, 201, 1023 to an appliance 109, 309, 1021 (such as a heater 2002). The installer may then identify the serial number or type of the appliance 2002, either manually or via software installed upon a mobile device 2008 that is able to communicate with the apparatus, as described above.

Once the type of heater 2002 has been identified, the installer is then able to order or obtain an SD memory card comprising configuration instructions. The apparatus 201 of this example includes a slot 216 for the insertion of the SD memory card. Once inserted, the SD memory card is able to execute the setup determined by the software loaded onto its memory.

In some embodiments, the configuration instructions contained upon the memory card may instruct the apparatus 201 to download a specific licence file. The apparatus may download the licence file from a remote device 5 or, for instance, cloud services (2012).

### Example - Usage

In an example, an embodiment of the apparatus 101 is installed upon a appliance 109 (for instance a ventilation appliance), and is connected to the ventilation appliance's data output port 110. In the example the apparatus 101 has already been installed, and so comprises configuration data 4 or a licence file, so that the apparatus 101 is configured to interact specifically with the ventilation appliance in question. The apparatus 101 also has a first set of instructions governing the general way in which the apparatus 101 functions (for example the code required to communicate with BACnet).

The embodiment of the apparatus 101 has a communication apparatus that is able to receive information from the appliance 102a. The ventilation appliance's internal intelligence may be able to send information to be received by the apparatus 101.

Upon receipt of the information from the appliance 109, the information is passed to a processor 103 which comprises a message broker module. The information is then processed, according to the configuration obtained from the licence file. Some information may be locally stored in a format that is accessible to external devices. Other information is processed into a format for communication to a BMS. This information is the send to a second communication module 102b which outputs the data, for instance via a mesh Wi-Fi system or TCP/IP, to reach the BMS, either directly or indirectly. A simple example of the information transmitted may be whether the ventilation appliance is actively ventilating, or whether the appliance is in stand-by mode.

The BMS may decide that the current status of the ventilation appliance needs to be changed. In this example the ventilation appliance is on stand-by, and should be actively ventilating. The BMS is able to transmit this instruction to the apparatus 101 associated with the appliance, again via mesh Wi-Fi or TCP/IP, for receipt by the communication apparatus 102b comprised within the apparatus 101.

Upon receipt of the instructions by the communication apparatus 102b, the information is passed onto a processor 103, which comprises a message broker module. The information is then processed into a format for communication to the ventilation appliance, the licence file providing the configuration instructions allowing this to happen.

Finally, the instruction is then communicated to the ventilation appliance, causing the ventilation appliance to change status, in this case by beginning ventilation.

It may be that a user wishes to directly provide instructions to the ventilation appliance, for instance to turn off ventilation. The user may have a mobile device 2008, such as a tablet or a mobile phone, that may comprise a downloadable software application that allows the user to directly interact with the apparatus and hence the ventilation appliance. The mobile device may communicate with the apparatus via Bluetooth or Wi-Fi. The software application may provide the user with a user interface, allowing the user to select instructions which may be communicated to the apparatus 101 associated with the appliance. The apparatus 101 may receive the instructions and pass them to the processor comprising the message broker module, which may process the data into a format for communication to the ventilation appliance.

The information may then be sent from the processor 103 to the communication apparatus 102a configured to communicate with the ventilation appliance, whereupon the information may be sent to the appliance, causing a change of the status of the appliance in-line with the user's wishes.

The apparatus 101 is also able to communicate information to the BMS, so that the BMS is aware of the procedural steps taken. The apparatus 101 is also able to store information relating to the instructions sent and received, regardless of origin or destination, so that this data is accessible to any third party device.

In other circumstances, the BMS communication may comprise a request for data. In receipt of this communication the apparatus 101 may act in this request in accordance with the configuration data 4. The configuration data 4 may indicate that upon receipt of such a request from a BMS the apparatus 101 should communication with the appliance 109 in order to obtain the most up-to-date parameters. In other situations the apparatus 101 may receive a similar request for data from external devices, such as cloud services 2012. Again, the apparatus 101 may deal with such a request in accordance with the configuration data 4, which in this case may be to output the data as stored in internal memory 106, rather than communicating directly with the appliance.

### Example - alternative usage

The presently disclosed apparatus 1, 101, 200, 201, 1023 has been described and defined in relation to a role involving the control of BMS appliances (for instance heaters 2002 and boilers 2004). However, the presently disclosed apparatus is not limited to such a use, and has the versatility to be used with any system wherein an existing system is used to control a variety of devices.

An example of such a use would be within a research laboratory situation. Such situations frequently have multiple pieces of equipment, each of which may have inbuilt intelligence, but which may rarely have been designed to function as part of a single system. This is because the specialist pieces of equipment are often manufactured by different companies, may have been purchased at different times, and are optimised for performance in isolation.

In the research setting, however, there is a need for the various pieces of laboratory equipment to be centrally coordinated. Experiments frequently run over long periods of time, and so manual intervention is inconvenient, and can require coordination of multiple machines.

The presently disclosed apparatus 1, 101, 200, 201, 1023 is suitable for such a setting. An installer can install an embodiment of the presently disclosed apparatus 1, 101, 200, 201, 1023 onto each piece of laboratory equipment. The apparatuses 1, 101, 200, 201, 1023 can then be connected to an output of the host equipment.

Each individual apparatus 1, 101, 200, 201, 1023 may then be able to communicate with the host equipment to obtain a serial number, and can then automatically obtain configuration data 4, such as a licence file, or can provide information to the installer allowing them to identify the configuration data for download.

One the apparatus 1, 101, 200, 201, 1023 is configured to interact with the host equipment the apparatus 1, 101, 200, 201, 1023 may communicate using the industry standard protocol of the host equipment. The information received can then be processed as described elsewhere, and transmitting using a common IP protocol.

The information can be transmitted to a local management system, or to a remote management system, using a common IP protocol. The management system may then have the ability to interrogate each piece of laboratory equipment, and control said equipment, leading to a flexible and powerful management system.

### Example - Broken link overcome

There is further presented a system comprising: a first building management system, BMS, appliance 309a (for instance a heater 2002) and, a second BMS appliance 309b (for instance a boiler 2004), a communications hub 320 being remote from both the first and second BMS appliances 309a, 309b; the first and second said BMS appliances 309a, 309b each wirelessly connectable to the communications hub 320 and configured to wirelessly send and/or receive data to/from the communications hub 320; wherein the first BMS appliance 309a is configured to: wirelessly receive first data from the second BMS appliance 309b; and, transmit second data to the communications hub 320, the second data associated with the first data.

Existing HVAC systems using a traditional BMS that rely on each separate appliance to be physically connected with local device can run into several problems. These problems may include long connection cables between the appliance and the local device, which may lead the installation engineer needing to fit more local devices into a building than necessary, simply to be able to connect up all of the appliances. Another issue with existing HVAC systems is when a point of failure occurs in a wired connection between a local device and an appliance. This means that in order for the appliance to continue being managed by the BMS, the wire needs to be repaired. This can be a problem in busy buildings where wires or wire carrying conduits may be accessed repeatedly or otherwise exposed to accidental damage.

An advantage of the presently disclosed apparatus 1, 101, 200, 201, 1023 is that it can form part of a "self-healing" system that can overcome the blocking of the signal between two devices on the network.

For example, a building may contain four HVAC appliances and an existing BMS system. One of the presently disclosed apparatuses 1, 101, 200, 201, 1023 may be installed onto each of the HVAC appliances, allowing each appliance to communicate, not only with the BMS system, but also with each other.

In these situations, the positioning of the HVAC appliances may have already been determined and is likely to have been optimised for the function of the HVAC appliance, the connection to the BMS system is a secondary requirement. For instance, a ventilation appliance must be attached in a certain place in order to properly function with the ventilation system, and such position may render impossible wireless communication directly with the BMS system. The ventilation appliance may have been connected to the BMS system via a wired connection, but such connections can develop faults preventing communication.

In this situation, the presently disclosed apparatus 1,101, 200, 201, 1023 has the intelligence to overcome the issue. The apparatus 1, 101, 200, 201, 1023 is able to communicate peer-to-peer with the apparatuses 1, 101, 200, 201, 1023 associated with the other HVAC devices, this can be via systems such as mesh WiFi or the thread network protocol. Therefore the HVAC appliance which is unable to communicate directly with the BMS system, may be able to communicate via a different route as an HVAC appliance associated apparatus 1, 101, 200, 201, 1023, or chain of HVAC appliance associated apparatuses 1, 101, 200, 201, 1023, may be able to forward the communication in either direction.

### Example - Establishing Relationships

The apparatus 1, 101, 200, 201, 1023, when installed onto an appliance 109, 309, 1021, is able to communicate peer-to-peer which other apparatuses 1, 101, 200, 201, 1023 and devices. For instance, the apparatus 1, 101, 200, 201, 1023 may be able to directly communicate with devices such as sensors, stats and valves. These devices may be able to communicate their purpose on the system, for instance they may contain IVP6 addresses that allow their purpose to be understood. In this situation, the presently provided apparatus 1, 101, 200, 201, 1023 may be able to automatically form a relationship with the device and automatically populate the data received from the device into the software of the apparatus.

For example, a temperature sensor may control boiler output. The software upon an embodiment of the presently provided apparatus asks the sensor "who are you" and the sensor broadcasts "who I am" messages. The apparatus 1, 101, 200, 201, 1023 then identifies the senor attributes and automatically populates its data into the on board programme. The sensor also simultaneously shares data to the wider world via the Wi-Fi. The information may able be used by the apparatus 1, 101, 200, 201, 1023 to generate an instruction for transmission to the host appliance 109, 309, 1021. This transmission may comprise an instruction to alter the status of the appliance in response to an indication from the sensor.

Relationships between devices, such as sensors, and appliances, such as pumps, may be manually created. This manual creation may occur via instructions from the BMS or direct from an installer interacting via a mobile device.

In order to address various issues and advance the art, the entirety of this disclosure shows by way of illustration various embodiments in which the claimed invention(s) may be practiced and provide for superior Processing apparatus, electronic apparatus, system and method. The advantages and features of the disclosure are of a representative sample of embodiments only, and are not exhaustive and/or exclusive. They are presented only to assist in understanding and teach the claimed features. It is to be understood that advantages, embodiments, examples, functions, features, structures, and/or other aspects of the disclosure are not to be considered limitations on the disclosure as defined by the claims or limitations on equivalents to the claims, and that other embodiments may be utilised and modifications may be made without departing from the scope and/or spirit of the disclosure.

Various embodiments may suitably comprise, consist of, or consist essentially of, various combinations of the disclosed elements, components, features, parts, steps, means, etc. In addition, the disclosure includes other inventions not presently claimed, but which may be claimed in future.

## Claims

1. A processing apparatus (1, 101, 200, 1023) for interfacing with electronic equipment (109);
the electronic equipment (109):
A) comprising communications apparatus (110) configured to operate in accordance with a first communication method (107); and,
B) being configured to:
I) receive, via the said communications apparatus (110), an input control signal for controlling the operation of the electronic equipment (109); and,
II) operate at least partially based on the said input control signal; and/or,
III) monitor an external physical stimulus and output a signal via the communications apparatus (110) based upon the said monitored stimulus;
the processing apparatus (1, 101, 200, 1023) comprising:
a memory (6, 106) containing at least a first set of instructions;
a first communications apparatus (102a) configured to:
operate in accordance with the first communications method (107); and,
receive data from the communication apparatus (110) of the electronic equipment (109); the received data associated with the operation of the electronic equipment (109);
a processor (103) configured to at least:
i) process the received data from the electronic equipment (109); and,
ii) determine output data from the processed data;
one or more second communication apparatus (102b) wherein at least one of the said second communication apparatus (102b) is configured to at least:
iii) transmit the determined output data, according to one or more second communication methods (108) that are different to the first communication method (107), to a remote device (105) different to the electronic equipment (109);
wherein the processing apparatus (1, 101, 200, 1023) is configured to perform at least one of said features: i), ii) or iii), based at least upon the said first set of instructions and configuration data (4), the configuration data (4) associated with the electronic equipment (109).

2. A processing apparatus (1, 101, 200, 1023) as claimed in claim 1 wherein the memory (6, 106) comprises the configuration data (4).

3. A processing apparatus (1, 101, 200, 1023) as claimed in claims 1 or 2 wherein processing apparatus (1, 101, 200, 1023) is configured to receive the configuration data (4) via one or more of the said second communication apparatus (102b).

4. A processing apparatus (1, 101, 200, 1023) as claimed in claim 3 wherein the processing apparatus (1, 101, 200, 1023) is configured to output a request for the configuration data (4) upon a communication sent between the first communications apparatus (102a) of the processing apparatus (1, 101, 200, 1023) and the communications apparatus (110) of the electronic equipment (109).

5. A processing apparatus (1, 101, 200, 1023) as claimed in any preceding claim wherein the said data received via the first communication apparatus (102a) comprises any of:
operating parameters of the electronic equipment (109); and/or,
operating parameter values of the electronic equipment (109); and/or,
identity data associated with the electronic equipment (109).

6. A processing apparatus (1, 101, 200, 1023) as claimed in any preceding claim wherein the step of processing the received data comprises any one or more of:
A) converting the input data from a first format to a second format;
B) filtering the input data.

7. A processing apparatus (1, 101, 200, 1023) as claimed in any preceding claim wherein the step of determining the output data comprises any one or more of:
A) selecting, based on the configuration data (4), at least a portion of the processed data for transmitting to the said remote device (105);
B) selecting, based on the configuration data (4), at least a portion of the processed data for transmitting to a further remote device (105a) that is different to the said remote device (105) and the electronic equipment (109);
C) selecting, based on the configuration data (4), at least a portion of the processed data for storing in the memory 6, 106).

8. A processing apparatus (1, 101, 200, 1023) as claimed in in claim 7 wherein any of the selecting steps A) and B) comprise:
determining a data type for each of the processed data;
comparing the said data types to a list of data types in the configuration data (4);
selecting the said portion of the processed data based on the comparison.

9. A processing apparatus (1, 101, 200, 1023) as claimed in in claim 7 configured to transmit the selected portion periodically to a remote data storage.

10. A processing apparatus as claimed in any preceding claim configured to:
A) output a request for first identity data to the electronic equipment (109) upon the first communication apparatus (102a) being connected to the communications apparatus (110) of the electronic equipment (109); and/or,
B) receive first identity data from electronic equipment (109) the upon the first communication apparatus (102a) being connected to the communications apparatus (110) of the electronic equipment (109).

11. A processing apparatus (1, 101, 200, 1023) as claimed in any preceding claim configured to perform any one or more of:
A) send a request for a further configuration data (4) via one of the second communication apparatus (102b);
B) send a request for a further set instructions of via one of the second communication apparatus (102b);
C) receive further configuration data (4) via one of the second communication apparatus (102b); wherein at least one or more of the said steps i)- iii) is based at least upon the further configuration data (4);
D) receive a further set of instructions via one of the second communication apparatus (102b); wherein at least one or more of the said steps i)- iii) is based at least upon the further set of instructions.

12. An electronic apparatus (360) comprising the electronic equipment (109) as described in claim 1 and a processing apparatus (1, 101, 200, 201, 1023) as claimed in any preceding claim located within or upon the said electronic equipment (109).

13. A system comprising:
a plurality of the electronic apparatus (360) as claimed in claim 12; and,
the remote device (105) as described in claim 1; wherein the said remote device (105) comprises a management apparatus, the management apparatus:
being remote from each of the said plurality of electronic apparatus (360); and,
configured to wirelessly communicate with each of the said plurality of electronic apparatus (360) via the said one or more second communication apparatus (102b);
comprising a processor configured to:
process data wirelessly received from at least one of the said plurality of electronic apparatus (360); and/or,
generate control signals for wirelessly transmitting to at least one of the said plurality of electronic apparatus (360).

14. A method for making an electronic apparatus (360) as claimed in claim 12; the method comprising the step of:
installing a processing apparatus (1, 101, 200, 1023) as claimed in any of claims 1-11 within or upon the said electronic equipment (109) as described in claims 1 or 3.

15. A method for installing an electronic apparatus (360) as claimed in claim 12; the method comprising the step of:
transmitting, from a remote device (105), configuration data (4) to the processing apparatus (1, 101, 200, 1023).
